# EUROPÄISCHE PATENTSCHRIFT

(11) **EP 4 533 156 B1**
(45) Veröffentlichungstag und Bekanntmachung des Hinweises auf die Patenterteilung: **01.07.2026**
(21) Anmeldenummer: 23729038.2
(22) Anmeldetag: 22.05.2023
(51) Int. Cl.: G02B 19/00, G02B 6/26, G02B 27/09, G03B 15/02

(54) **ANORDNUNG ZUR ERZEUGUNG EINES BEABSTANDETEN, EINSTELLBAREN LICHTFELDES FÜR DIE MAKROFOTOGRAFIE, INSBESONDERE ZUR OBJEKTANGEPASSTEN BELEUCHTUNG MIT SCHARFEM LICHTFELDRAND**
ARRANGEMENT FOR GENERATING A SPACED-APART, ADJUSTABLE LIGHT FIELD FOR MACRO-PHOTOGRAPHY, MORE PARTICULARLY FOR OBJECT-ADAPTED ILLUMINATION WITH A SHARP LIGHT FIELD EDGE
AGENCEMENT POUR GÉNÉRER UN CHAMP LUMINEUX RÉGLABLE ESPACÉ POUR LA MACRO-PHOTOGRAPHIE, PLUS PARTICULIÈREMENT POUR UN ÉCLAIRAGE ADAPTÉ À UN OBJET AVEC UN BORD DE CHAMP LUMINEUX NET

(30) Priorität: 25.05.2022 DE 102022001895
(43) Veröffentlichungstag der Anmeldung: 09.04.2025
(73) Patentinhaber: Rusch, Volker, 35745 Herborn (DE)
(72) Erfinder: RUSCH, Johannes, 3855 Brienz (CH); FUHRMANN, Andreas, 73066 Uhingen (DE)
(74) Vertreter: Klunker IP Patentanwälte PartG mbB
(86) Internationale Anmeldenummer: PCT/EP2023/063617
(87) Internationale Veröffentlichungsnummer: WO 2023/227510

(56) Entgegenhaltungen:
- US-A1- 2013 148 925
- US-A1- 2016 054 646

## Beschreibung

Die anspruchsvolle moderne Fotografie im Makro-Bereich benötigt bei der Aufnahme kleiner Objekte und Objektdetails, die oft auch gegenüber einem Luftstrom empfindlich sind, ein in der Regel recht scharf berandetes Lichtfeld zur Objektbeleuchtung. Dabei soll auf dem Objekt bei kontinuierlicher Beleuchtung eine sehr hohe Beleuchtungsstärke im hohen fünfstelligen Lux-Bereich und gegebenenfalls auch bis in den sechsstelligen Lux-Bereich erreicht werden sowie auch eine definierte Farbtemperatur von 5600 K +/- 100 K. Für die Fotografie im Makro-Bereich sollen wegen der langen Lebensdauer und der hohen Energieeffizienz LEDs im Hochleistungsbereich als Leuchtmittel eingesetzt werden. Diese sind in der Regel mit einer ebenen Abstrahlfläche ausgebildet. Für die Nutzung einer LED in der anspruchsvollen Fotografie ist im Minimum ein Farbwiedergabeindex, auch als CRI-Wert (CRI = Color Rendering Index) bekannt, von 90 und bei höchsten Ansprüchen sogar ein CRI-Wert von 95 bis 98 erforderlich, was mit LEDs beim Stand der Technik bereits erreichbar ist.

Das Lichtfeld sollte außerdem in seiner lateralen Ausdehnung für die Objektbeleuchtung einstellbar sein. Ein kreisförmiges Lichtfeld, insbesondere mit einem Durchmesserbereich von 0,9mm bis 12mm ist für die Makrofotografie von kleinen Objekten und Objektdetails als sehr geeignet erkannt worden. Auch Lichtfelder mit einer beliebig lateral ausdehnten Form wie beispielsweise Streifen, Dreiecke, Vielecke, Sterne, Punktmuster oder Sicheln - auch in voneinander getrennten Bereichen - sind von großem Nutzen für die moderne Fotografie im Makro-Bereich. Dies gilt insbesondere dann, wenn nur bestimmte Details eines Objekts bei der Aufnahme hervorgehoben werden sollen - wie beispielsweise der Korb einer vergleichsweise kleinen Blumenblüte mit einem Durchmesser von nur etwa 8mm. Dabei sollte das Lichtbündel am Objekt eine recht gute Annäherung an ein Flat top-Profil aufweisen, also weitgehend homogen, mit geringem Randabfall und scharf berandet sein. Die gehobene Makrofotografie macht außerdem erforderlich, dass das Lichtfeld keinen einzigen Lichthof oder andersartige unerwünschte Lichtfiguren wie Sicheln, Lichtspots oder Reflexe von optischen Flächen im System aufweist sowie auch Streulicht außerhalb des Lichtfeldes unter dem Aspekt der Auflösung der Makrofotografie vernachlässigbar gering ist.

Überdies ist bei Anwendung sehr leistungsstarker LEDs mit Leistungen gleich oder sogar deutlich oberhalb von 20 Watt die Abwärme derselben sehr von Nachteil für das Objekt und die fotografische Ausrüstung, wenn eine Anordnung mit einer LED oder mehrerer LEDs dieser Leistungsklasse in der unmittelbaren Umgebung des aufzunehmenden Objekts platziert ist. Auch ein Luftstrom zur Kühlung schafft hier nicht immer eine Abhilfe, da beispielsweise sehr empfindliche Objekte wie zarte Blütenblätter einer Blume keinem Luftstrom, auch nicht in der näheren Umgebung ausgesetzt werden dürfen. Ein Flattern oder Bewegen feiner, kleinteiliger Objekte durch einen Luftstrom in der unmittelbaren Nähe des Objekts während der Aufnahme muss unbedingt vermieden werden.

Darüber hinaus ist von der Anordnung zur Erzeugung des Lichtfeldes ein freier Abstand zum Fotoobjekt von mindestens 80mm, besser 100mm und im Extremfall bis zu 200mm als sehr vorteilhaft erkannt worden, da in der Regel großvolumige Fotoobjektive eingesetzt werden, die vor dem Objekt Platz benötigen und die Anordnung zur Erzeugung des Lichtfeldes nicht im aufzunehmenden Objektfeld sichtbar sein oder die freie Sicht auf das Objekt einschränken darf. Dies ergibt sich auch aus der Notwendigkeit, dass ein Schattenwurf dieser Anordnung auf das Objekt beim Einsatz weiterer Lichtquellen zur fotografischen Aufnahme unbedingt zu vermeiden ist.

### Stand der Technik

Unter diesen oben genannten Gesichtspunkten wurde der Stand der Technik für die Beleuchtung in der Makrofotografie für den sichtbaren Spektralbereich recherchiert.

Für den fotografischen Bereich hatte die Schweizer Firma Profot AG am 09.04.2022 unter der Marke Elinchrom ein Faseroptik-Lichtleitfaser-Kit als Zubehör im Sortiment. Dieses kann mittels eines Adapters an einen gebläsegekühlten Elinchrom-Blitzlampenkopf angeschlossen werden und leitet das Licht über einen Glasfaser-Lichtleiter zum Objekt. Mit einem einfachen Linsenaufsatz kann das Licht noch leicht gebündelt werden. Allerdings wird so lediglich ein unscharfer Lichtpunkt von ca. 30mm Durchmesser erzeugt, was den Anforderungen der gehobenen Makrofotografie bei Weitem nicht genügt.

Die polnische Firma Godox bot am 07.04.2022 mit der Godox S30 LED-Leuchte als Basis ein modulares System mit 30Watt elektrischer Leistungsaufnahme für die Table-top-Werbefotografie, die Porträtfotografie oder für Videoaufnahmen an. Diese Godox S30 LED-Leuchte, welche einen integrierten Lüfter aufweist, kann mit dem Godox SA-P1 Projektionsvorsatz in Verbindung mit verschiedenen Projektionsobjektiven des oben genannten Herstellers mit 60mm, 85mm oder auch 150mm Brennweite und mittels fein strukturierter, wechselbarer Abschattblenden fokussiertes und recht fein strukturiertes Licht, insbesondere im Abstand deutlich oberhalb 0,5 Meter erzeugen. Dabei beträgt der maximale Durchmesser des ausgeleuchteten Blendenfeldes im Godox SA-P1 Projektionsvorsatz um 45mm. Dieses Blendenfeld wird scharf abgebildet. So können sowohl vielfältige Muster mittels verschiedener Abschattblenden dieser Größe vergleichsweise scharf projiziert werden als auch mobile, frei bewegliche Blendenlamellen eingesetzt werden, um nahezu beliebige Objektdetails in einem Feld von durchaus einem Quadratmeter Fläche auszuleuchten. Diese beweglichen Blendenlamellen bezeichnet der Hersteller als Rahmenverschlüsse. Jedoch auch für das Teleobjektiv mit 150mm Brennweite, von der Firma Godox mit SA-03 150mm bezeichnet, liegt das voll ausgeleuchtete Lichtfeld stets deutlich oberhalb von 50mm Durchmesser. Denn eine 1:1-Abbildung mit dem Teleobjektiv SA-03 150mm ist technisch ohne einen ganz erheblich verlängerten Zwischentubus, der nicht im Angebot der Firma Godox und auch nicht anderer Hersteller ist, auch nicht annähernd möglich. Selbst bei einer 1:1-Abbildung des Blendenfeldes des Godox SA-P1 Projektionsvorsatzes würde ein Lichtfeld von näherungsweise 45mm Durchmesser entstehen. Durch Nutzung einer kleinen festen Abschattblende oder einer entsprechend klein eingestellten Irisblende kann durch eine starke Abblendung in der Blendenebene des Godox SA-P1 Projektionsvorsatzes zwar auch ein Lichtfeld in Form eines Lichtspots mit beispielsweise einem Durchmesser von nur 4mm projiziert werden. Dieses ist jedoch dann nur mäßig, aber nicht gestochen scharf, Dies liegt an der begrenzten optischen Modulationsübertragungsfunktion der verfügbaren Projektionsobjektive der Firma Godox. Diese projizierten kleinen Lichtspots sind jedoch für die Nutzung in der Makrofotografie vergleichsweise lichtschwach. Denn durch Abblendung des Lichtfeldes von 45mm Durchmesser auf eine kleine Öffnung im unteren einstelligen Millimeterbereich mittels Abschattblende gehen bereits deutlich mehr als 99% der Gesamt-Lichtenergie der Godox S30 LED-Leuchte verloren. Dieses System auf der Basis der Godox S30 LED-Leuchte mit dem angebotenen Projektionsvorsatz und den verfügbaren Projektionsobjektiven stellt demzufolge überhaupt kein geeignetes System für die Makrofotografie mit Lichtfeldern von 0,9mm bis maximal 12 mm Durchmesser und einer Beleuchtungsstärke deutlich oberhalb 10.000 Lux dar. Es soll noch einmal bemerkt werden, dass physikalisch-technisch begründet, mit keinem kompakten, kostengünstigen Standard-Projektionsobjektiv, ausgehend von einem Lichtfeld von 45mm Durchmesser, ein Spot von 12mm Durchmesser ohne jedes Abblenden in einem freien Abstand vom Scheitel der Frontlinse dieses Projektionsobjektivs von 100mm in einer kompakten Gesamtanordnung erzeugt werden kann.

Der am 06.04.2022 angebotene Godox VSA-19K Scheinwerfer-Anbausatz besitzt für die Lichtfeldprojektion bei Fotostudioaufnahmen mit Objektdistanzen im unteren einstelligen Meterbereich ein korrigiertes Linsensystem und verschiedenartig geformte, wechselbare und auch gezielt bewegliche Abschattblenden-Elemente, die scharf oder auch mit Verlauf auf das Objekt, beispielsweise auf den Körper eines menschlichen Models, abgebildet werden. Dieses System ist jedoch überhaupt nicht für die Makrofotografie ausgelegt, da es mit einem aufgeweiteten, also einem divergenten Strahlenbündel arbeitet. Es ist zwar auch hier möglich, durch eine starke Abblendung mittels einer vergleichsweise kleinen Abschattblenden-Öffnung ein kreisförmiges Lichtfeld, auch als Lichtspot bekannt, mit einem kleinen Durchmesser von nur wenigen Zentimetern zu erzeugen. Doch dieser Lichtspot ist dann unter dem Gesichtspunkt der Makrofotografie immer noch deutlich zu groß und vor allem vergleichsweise lichtschwach, da nur ein sehr kleiner Bruchteil des Lichtstroms dieses Lichtfeldprojektors, beispielsweise deutlich unter 1%, dann den kleinen Lichtspot im unteren einstelligen Zentimeterbereich bildet. Außerdem wird hier die sehr leistungsstarke LED-Quelle von bis zu 300 W direkt an den Lichtfeldprojektor mechanisch angesetzt, was bei der Makrofotografie durch die Abluft der Kühlung der LED-Quelle im Nahbereich sehr stören kann.

Von der Firma Schölly wurden am 06.04.2022 die leistungsstarken und vielseitig einsetzbaren LED-Lichtquellen FLEXILUX 4000 und FLEXILUX 7000 jeweils mit einem Faserausgang angeboten, welche eine Farbtemperatur von 5800 K beziehungsweise 6500 K aufweisen. Diese oben hierzu genannten Farbtemperaturen sind für den vorgegebenen Anwendungsbereich von 5600 K nicht geeignet und schließen somit diese Lichtquellen aus, da diese darüber hinaus auch keinen kleinen Lichtspot in einem freien Arbeitsabstand von 100mm erzeugen können.

Von der deutschen Firma Faseroptik Henning wurden am 09.04.2022 LUMOLUX-Fokussiervorsätze für Lichtleiter, bestehend aus einem Faserbündel, mit LED-Licht angeboten, um den Abstrahlwinkel am Ausgang des Lichtleiters zu verringern oder Licht zu fokussieren. Diese Fokussiervorsätze bestehen aus Linsengruppen mit Kugellinsen, Asphären oder auch Plankonvexlinsen. Diese sammeln das Licht und fokussieren das Licht aus dem Lichtleiterausgang auf ein kreisförmiges Lichtfeld. Es werden jedoch keine Fokussiervorsätze für Lichtfelder im Durchmesserbereich von 1mm bis 4mm bei einem freien Abstand von mindestens 80mm angeboten. Außerdem gibt es keine Blendenfunktion, um den Lichtfelddurchmesser einstellen zu können. Die Fokussiervorsätze sind überdies recht schlank und bleiben somit auch bei den angegebenen freien Arbeitsabständen bei der numerischen Beleuchtungsapertur deutlich unter dem erwünschten Wert von 0,12.

Von der deutschen Firma SensoPart wurden am 09.04.2022 zur Kleinteileerkennung, insbesondere auch zur Locherkennung, Lichtleiter mit einstellbaren Tastweiten und Lichtfleckgrößen angeboten. Dazu gibt es spezielle Vorsatzoptiken für unterschiedliche feste, aber auch variable Fokus-Abstände. Mit den fokussierbaren Koaxial-Lichtleitern sind Lichtfleckgrößen von 1,3 mm bis 0,65 mm Durchmesser mit einfarbigem Licht realisierbar. Jedoch betragen die Arbeitsabstände zum Objekt im Maximum nur 20mm, was für die Makrofotografie - auch neben dem völlig unpassenden Lichtspektrum - überhaupt nicht geeignet ist.

Die chinesische Firma Shanghai Jinbei Photographic Equipment Limited Company mit Vertrieb in Deutschland hatte am 10.04.2022 das extrem lichtstarke EFD-150 LED Dauerlicht - 5500 Kelvin im Angebot. Dieses LED-Dauerlicht mit 5500 Kelvin Farbtemperatur, einem CRI-Wert von über 97 und einer Leistungsaufnahme von 150W wird jedoch ohne Zubehör zur Fokussierung angeboten. Die Abstrahlfläche der LED beträgt gut 30mm im Durchmesser. Somit ist diese Abstrahlfläche für die Makrofotografie eher schon zu groß und in dieser Form allein auch nicht dafür geeignet.

Die HEDLER Profilux LED650 der deutschen Firma Hedler ist eine ultrakompakte LED-Flächenleuchte mit Dauerlicht.

Diese dimmbare LED-Flächenleuchte mit 75W Leistungsaufnahme erzeugt aus einer leistungsstarken LED mit einer einzigen Abstrahlfläche Licht in Tageslichtqualität mit einer Farbtemperatur von näherungsweise 5600K und einem CRI-Wert größer 96. Die Abstrahlfläche der LED beträgt näherungsweise 20mm im Durchmesser. Somit ist diese Abstrahlfläche für die Makrofotografie schon besser geeignet als die wesentlich größere Abstrahlfläche des EFD-150 LED-Dauerlichts der chinesischen Firma Jinbei [9]. Dennoch ist in dieser Form allein auch die HEDLER Profilux LED650 Flächenleuchte nicht für die Makrofotografie geeignet, um Lichtfelder von 12mm Durchmesser und kleiner zu erzeugen.

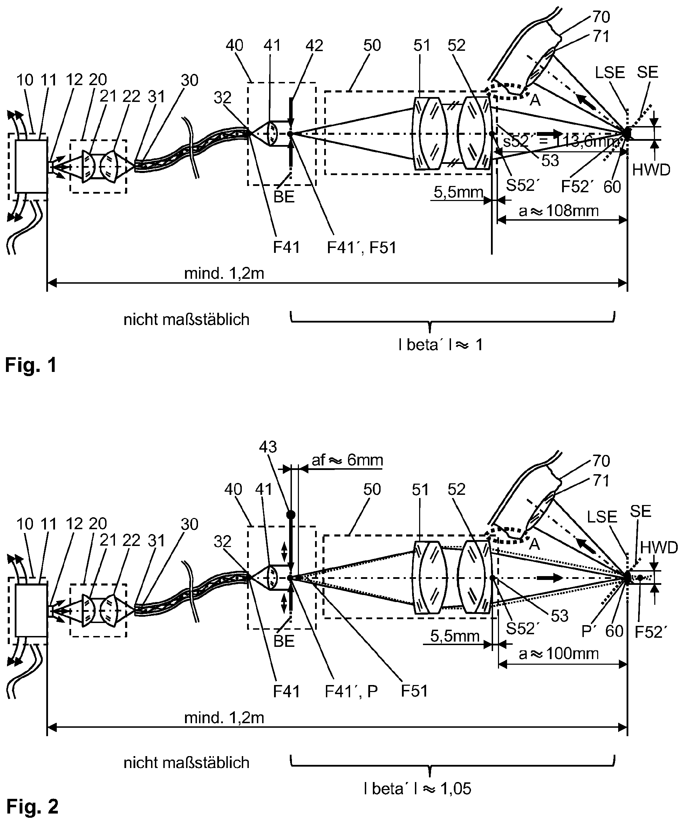

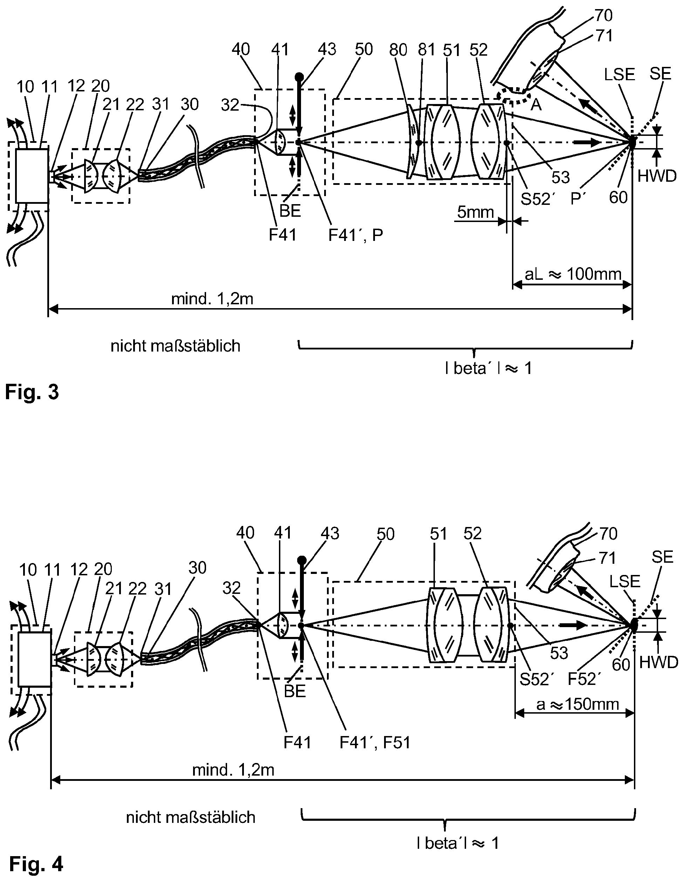

In der Schrift US 2076240 von 1934 wird in der Figur 1 eine Anordnung für einen Projektionsapparat zur Erzeugung eines Lichtspots oder eines Flutlichts mit einer Glühlampe 13 in Kolbenform mit einem leuchtenden Filament 13b und einem Spiegel 12 zur Sammlung des abgestrahlten Lichts in Form eines Teils eines Rotationsellipsoids - auch zur Nutzung für die Fotografie - beschrieben. Im Bereich um den ersten hier nicht explizit ausgewiesenen Brennpunkt des Rotationsellipsoids steht - für den Fachmann klar erkenntlich - das Filament der Glühlampe 13, welches in den gesamten Raum abstrahlt, und im Bereich um den zweiten Brennpunkt, der ebenfalls nicht explizit dargestellt ist, steht eine Irisblende 29. Dieser Irisblende ist eine optische Abbildungsstufe mit zwei baugleichen Plankonvexlinsen in einem Tubus, siehe Figur 4, nachgeordnet, deren konvexe Flächen zwecks Minimierung der Aberrationen einander zugekehrt sind, um die Öffnung der Irisblende scharf abzubilden. Da LEDs mit einer ebenen Abstrahlfläche nur in den Halbraum und dabei auch nur mit erheblichem Abfall in die seitlichen Bereiche abstrahlen können, ist der Einsatz eines Spiegels in Form eines Teils eines Rotationsellipsoids für eine LED nicht sehr zweckmäßig. Darüber hinaus erfolgt ja bei einem Rotationsellipsoid auch nur die Abbildung der beiden Brennpunkte eines Rotationsellipsoids ineinander ohne Aberrationen, während bei der Positionierung einer großflächigen LED in einem Brennpunkt des Rotationsellipsoids erhebliche Aberrationen bei der Abbildung in den zweiten Brennpunkt auftreten, wenn der Rotations-Ellipsoid-Spiegel nicht gerade sehr groß im Verhältnis zur Ausdehnung der LED ausgebildet ist. Die Nutzung eines Rotations-Ellipsoid-Spiegels stellt in Verbindung mit einer großflächigen LED in keinem Fall eine technisch und wirtschaftlich gute Lösung dar. Die Abbildung der Irisblende 29 in den Figuren 1, 6 und 7 erfolgt mit zwei Plankonvexlinsen 51 und 52 in einem Tubus 26. Die konvexen Flächen der beiden Plankonvexlinsen 51 und 52 sind zwecks Minimierung der Aberrationen einander zugekehrt. Jedoch ist eine Abbildungsstufe mit nur zwei Plankonvexlinsen, insbesondere wegen der hierbei nicht behobenen chromatischen Aberrationen für die Erzeugung scharf abgebildeter Lichtfelder, also Lichtspots, nicht gut geeignet. Es können hier schon bei einem Verhältnis von Linsendurchmesser zu Linsenbrennweite von 0,4 bei einem Borkronglas als Linsenwerkstoff je nach Lichtfeldgröße, die im Durchmesserbereich von wenigen Millimetern liegen soll, sehr unerwünschte Farbsäume auftreten. Diese sind für die Makrofotografie mit der Auflösung kleinster Objektdetails extrem störend, wobei bei der Anwendung von nur zwei Plankonvexlinsen auch eine erhebliche Randunschärfe des Lichtfeldes zu erwarten ist.

Die Schrift DE 7607253U von 1976 beschreibt einen fokussierenden Vorsatz für flexible Lichtleiter, der eine Sammellinse zur Fokussierung enthält. Die Sammellinse kann auch als Asphäre ausgebildet sein. Damit soll der aus dem Lichtleiter ausgestrahlte Lichtkegel in seinem Winkel verringert werden, um das Licht zu konzentrieren. Mit dieser Anordnung unter Nutzung nur einer einzelnen Linse lässt sich jedoch kein randscharfes und in sich weitgehend homogenes Lichtfeld im Durchmesserbereich von wenigen Millimetern ohne chromatische Aberrationen erzeugen, welche für die Makrofotografie sehr störend sind. Darüber hinaus ist das Lichtfeld in seiner lateralen Größe auch nicht einstellbar.

Die US 2013/148925 A1 zeigt ein System welches Laserlicht mittels eines Lichtleiters zu einer optischen Einrichtung zur Laserbearbeitung von Oberflächen leitet. Dieses System ist in vielen technischen Details der Vorrichtung dieser Anmeldung ähnlich.

### Ziel der Erfindung

Das Ziel der Erfindung besteht darin, eine Lehre für eine Anordnung zur Erzeugung eines beabstandeten, einstellbaren Lichtfeldes für die Makrofotografie, insbesondere auch zur objektangepassten Beleuchtung mit scharfem Lichtfeldrand zu geben. Diese Anordnung soll der wirtschaftlichen Nutzung zugeführt werden.

### Aufgaben der Erfindung

Der Erfindung liegt unter anderem die Aufgabe zugrunde, eine verbesserte Anordnung für ein einstellbares Lichtfeld für die Makrofotografie zur objektangepassten Beleuchtung mit einer hohen Beleuchtungsstärke und einer möglichst gleichmäßigen Lichtverteilung sowie mit einem scharfen Lichtfeldrand bereitzustellen.

Dabei soll insbesondere die Lichtfeldgröße zwischen 0,9mm bis 12mm Durchmesser einstellbar sein und der freie Arbeitsabstand zum Fotoobjekt mindestens 80mm besser 100mm und im Extremfall bis 200mm betragen. Für einen Halbwert-Durchmesser HWD(Emax), bezogen auf die maximale Beleuchtungsstärke Emax, eines kreisförmigen Lichtfeldes im Durchmesserbereich von 0,9mm bis 12mm soll dieses Lichtfeld sich für das normalsichtige Auge aus der deutlichen Sehentfernung von 250mm mit einem scharfen Lichtrand darstellen. Dabei sollen am Lichtrand dieses Lichtfeldes keine Farbsäume wahrnehmbar sein sowie auch keine störenden Reflexe von optischen Oberflächen und auch keine störenden Lichthöfe visuell im Umfeld des Lichtfeldes erkennbar sein.

Um eine hohe Beleuchtungsstärke E im Lichtfeld zu erreichen, soll die numerische Apertur des Beleuchtungslichtbündels für einen freien Arbeitsabstand zum Fotoobjekt von 100mm größer/gleich 0,12 sein. Dies entspricht einem vollen Winkel des Lichtkegels zu einem einzelnen Punkt im Lichtfeld auf der optischen Achse von näherungsweise 14°.

Die Beleuchtung ist bevorzugt dauerhaft zu gestalten. Demzufolge soll diese nicht als Blitzbeleuchtung erfolgen. Weiterhin soll eine sehr hohe Beleuchtungsstärke im oberen fünfstelligen Lux-Bereich und im Extremfall auch bis in den unteren oder sogar mittleren sechsstelligen Lux-Bereich mit einer definierten Farbtemperatur von 5600K +/- 100K und einem Color Rendering Index von mindestens 90, besser oberhalb von 96, bei Dauerlicht im Lichtfeld zur Objektbeleuchtung für die Makrofotografie erreicht werden. Das einzusetzende Hochleistungs-LED-Leuchtmittel mit einer beim Stand der Technik in der Regel unverzichtbaren Zwangsbelüftung soll mindestens um einen Meter vom Objekt für die makrofotografische Aufnahme entfernt sein, auch wenn der Lüfter des Leuchtmittels vergleichsweise leise ist, damit auch restliche Luftströme keinerlei Bewegungen, Flattern oder Vibrationen des Fotoobjekts erzeugen können. Das muss insbesondere beachtet werden, wenn dieses Fotoobjekt hauchzart, folienartig oder spinnennetzartig ausgebildet ist. Der Aufbau der Anordnung zur Erzeugung eines beabstandeten, einstellbaren Lichtfeldes für die Makrofotografie soll insbesondere unter Nutzung kostengünstiger Optikkomponenten vom Massenmarkt ausführbar sein und dies bei einer kompakten Bauweise, insbesondere im Frontbereich der Anordnung, wo das Licht in Richtung Fotoobjekt austritt.

Außerdem soll die konstruktive Gestaltung der Anordnung und insbesondere der Abbildungsstufe einen möglichst geringen Außendurchmesser aufweisen. Das heißt, der maximale Außendurchmesser soll in jedem Fall kleiner als das 1,6fache des größten Linsendurchmessers, besser sogar kleiner als das 1,4fache des größten Linsendurchmessers in der Abbildungsstufe sein, welche die größten Linsen enthalten soll.

### Beschreibung der Erfindung

Es geht in der Erfindung um eine Anordnung zur Erzeugung eines beabstandeten, einstellbaren Lichtfeldes für die Makrofotografie, insbesondere auch zur objektangepassten Beleuchtung mit scharfem Lichtfeldrand und dabei mit einem Lichtfeld mit mindestens einer lateralen Ausdehnung von größer/gleich 0,9mm und einer maximalen lateralen Ausdehnung kleiner/gleich 12mm zur Beleuchtung kleinteiliger Objekte und kleiner Objektdetails. In dieser Anordnung sind folgende Komponenten angeordnet:
- Eine LED, welche als eine Dauerlicht-LED mit mindestens 20W elektrischer Leistungsaufnahme und einem CRI größer/gleich 90 ausgebildet ist,
- ein optisches Kopplungsmodul,
- ein Lichtleiter, der als Fluid-Lichtleiter mit einem Durchmesser des optisch nutzbaren Bereiches zwischen 2,5mm und 10mm und ausgebildet ist, der von den Fachleuten auch als Flüssiglichtleiter bezeichnet wird, der dem optischen Kopplungsmodul nachgeordnet ist,
- ein Blendentubus, der mit einer hochaperturigen, asymmetrischen Sammellinse und mit mindestens einer der hochaperturigen, asymmetrischen Sammellinse nachgeordneten Abschattblende ausgebildet ist, deren Bild das Lichtfeld ist, und
- eine dem Blendentubus nachgeordnete Abbildungsstufe für einen Betrag des Abbildungsmaßstabes beta' bei der Abbildung der Abschattblende zwischen 0,7 und 2.

Dabei ist das optische Kopplungsmodul, welches der Lichteinkopplung von der Dauerlicht-LED in den Fluid-Lichtleiter dient, mit zwei positiven und dabei asymmetrisch gestalteten asphärischen Linsen mit einer numerischen Apertur größer/gleich 0,4 ausgebildet. Der Betrag des paraxialen Abbildungsmaßstabes des optischen Kopplungsmoduls beta_pK' liegt dabei zwischen 0,5 und 1,2. Der Fluid-Lichtleiter von mindestens 0,8m Länge und ist zwischen dem optischen Kopplungsmodul und dem Blendentubus angeordnet und das Austrittsfenster des Fluid-Lichtleiters ist zumindest näherungsweise in der vorderen Brennebene der hochaperturigen, asymmetrischen Sammellinse angeordnet. Dabei weist die hochaperturige, asymmetrische Sammellinse im Blendentubus eine Brennweite größer/gleich 4mm und kleiner/gleich 24mm auf und die numerische Apertur derselben ist stets größer/gleich 0,4. Die stärker gekrümmte Linsenfläche der hochaperturigen, asymmetrischen Sammellinse ist dabei der Abschattblende zugekehrt. Die hochaperturige, asymmetrische Sammellinse ermöglicht es, auch eine Abschattblende recht gleichmäßig auszuleuchten, die im Durchmesser größer als der Durchmesser des Lichtleiters ist. Dabei wird das Licht durch die Wirkung der hochaperturigen, asymmetrischen Sammellinse nach dem Passieren der Abschattblende zu einem großen Anteil in die Abbildungsstufe gelenkt. So führt die Abbildung der Abschattblende durch die Abbildungsstufe zur Erzeugung eines recht gleichmäßig ausgeleuchteten Lichtfeldes.

Die Abbildungsstufe ist mit mindestens einer lichtsammelnden, achromatischen Linsengruppe, deren Linsendurchmesser größer/gleich 38mm ist, zur Erzeugung eines scharf berandeten Lichtfeldes durch eine optische Abbildung ausgestaltet. Das Lichtfeld entsteht im Ergebnis der Abbildung der Abschattblende. Dieses Lichtfeld zur Nutzung bei der Makrofotografie entsteht also durch die Abbildung der Abschattblende mittels mindestens einer lichtsammelnden, achromatischen Linsengruppe. Der freie Arbeitsabstand a, beziehungsweise aL, zum Lichtfeld vom vorderen mechanischen Anschlag der Fassung der Abbildungsstufe ist größer/gleich 80mm.

Aus thermischen Gründen ist das optische Kopplungsmodul zwischen der Dauerlicht-Hochleistungs-LED und dem Fluid-Lichtleiter unverzichtbar, da eine Dauerlicht-Hochleistungs-LED im Bereich von 20 Watt oder deutlich mehr Dauerleistung, beispielsweise auch 100 Watt, dem Fluid-Lichtleiter nicht im Dauerbetrieb direkt vorgeordnet sein kann, ohne dass die Gefahr der Zerstörung des Fluid-Lichtleiters durch Wärme besteht. Dagegen kann eine der Dauerlicht-Hochleistungs- LED direkt nachgeordnete Linse aus optischem Glas bei einer geeigneten mechanischen Fassung derselben, welche auch einen Kühlkörper besitzen kann, diesen Wärmeeintrag im Dauerbetrieb aushalten. Im Extremfall kann die der Dauerlicht-Hochleistungs- LED direkt nachgeordnete Linse auch aus Quarzglas gefertigt sein, die besonders unempfindlich gegen eine starke Erwärmung ist.

Die Randschärfe des Lichtfeldes wird im Rahmen dieser Erfindung definiert. Die Beleuchtungsstärke E des Lichtfeldes bildet über dem Radius r des Lichtfeldes einen Kurvenverlauf zumindest näherungsweise in Hutform, die schon recht gut an ein hochstehendes Rechteck mit etwas gerundeten Kanten angenähert ist. Als randscharf soll hier ein Lichtfeld gelten, wenn für die Abbildungsstufe bei einem Durchmesser des Lichtfeldes von einem Millimeter bis zu 12 Millimetern die Anzahl der übertragbaren Linienpaare bei einem Linienkontrast K von 0,5 im Randbereich dieses Lichtfeldes mindestens bei 10 liegt, also der Linienkontrast K im Randbereich dieses Lichtfeldes größer/gleich 0,5 für 10 Linienpaare pro Millimeter ist. Bei dieser Definition der Randschärfe spielt also die Bildfeldkrümmung, die bei einer vergleichsweise einfachen Beleuchtungsoptik schon bestehen kann, eine eher untergeordnete Rolle, zumindest wenn das Lichtfeld kreisförmig und zur optischen Achse der Beleuchtungsoptik zentriert ist. Dies gilt auch für die Verzeichnung der Beleuchtungsoptik, die sich hier für diese Beleuchtungsaufgabe eher weniger bis gar nicht negativ bemerkbar macht.

Bevorzugt ist in der Anordnung zur Erzeugung eines beabstandeten, einstellbaren Lichtfeldes für die Makrofotografie die Abbildungsstufe mit nur einer einzigen lichtsammelnden, achromatischen Linsengruppe ausgebildet. Diese lichtsammelnde, achromatische Linsengruppe ist dann vorzugsweise als ein lichtsammelndes achromatisches Triplett ausgeführt. Ein derartiges Triplett kann dabei mit gekitteten Linsen oder auch ungekittet ausgebildet sein. Bevorzugt ist wegen der geringeren Lichtverluste ein gekittetes Triplett. Vorzugsweise einsetzbare Tripletts sind insbesondere die nach Steinheil, aber auch Tripletts nach Hastings und Cooke können vorzugsweise eingesetzt werden.

Bevorzugt kann anstelle nur einer lichtsammelnden, achromatischen Linsengruppe auch ein Paar von lichtsammelnden, gekitteten, achromatischen Linsen-Dubletts in der Abbildungsstufe eingesetzt werden. Dies ergibt für Beleuchtungszwecke bei der Makrofotografie schon eine hinreichend gute bis sehr gute Abbildungsqualität für das Lichtfeld, welches das optische Bild der beleuchteten Abschattblende darstellt. Die Abbildungsstufe kann aber auch vorzugsweise mit zwei lichtsammelnden, ungekitteten, achromatischen Linsen-Dubletts, also vom Fraunhofer-Typ, ausgebildet sein. Eine Abbildungsstufe mit ungekitteten, achromatischen Linsen-Dubletts überbietet in der Regel hinsichtlich Abbildungsqualität eine Abbildungsstufe mit lichtsammelnden, gekitteten, achromatischen Linsendubletts. Jedoch weisen ungekittete, achromatische Linsen-Dubletts im Vergleich zu gekitteten eine etwas geringere Lichttransmission auf und stehen als Massenprodukt nur in begrenzter Auswahl am Markt zur Verfügung.

Grundsätzlich ist jedoch zu beachten, dass bei allen Optik-Herstellern kostengünstige, lichtsammelnde, gekittete, achromatische Linsen-Dubletts nur in einer vergleichsweise groben Staffelung der Brennweiten und der Durchmesser verfügbar sind. Dadurch ist nicht jeder Arbeitsabstand, beispielsweise ein Arbeitsabstand von 100mm von der Fassung der Abbildungsstufe bei einer exakten 1:1-Abbildung des Lichtfeldes möglich, wenn beispielsweise zwischen dem Linsenscheitel der letzten Linse und der Fassung konstruktionsbedingt ein typischer Abstand von näherungsweise 5,5mm besteht. Eine kundenspezifische Entwicklung und Fertigung von lichtsammelnden, gekitteten, achromatischen Linsen-Dubletts, deren Brennweite ausschließlich für eine Kleinserie angepasst ist, stellt in der Regel aus Kostengründen keine Alternative dar.

Es ist aber auch grundsätzlich möglich, anstelle nur einer lichtsammelnden, achromatischen Linsengruppe vorzugsweise ein Paar von Tripletts nach Steinheil oder auch nach Hastings für die Abbildung der beleuchteten Abschattblende als lichtsammelnde, achromatische Linsengruppe einzusetzen. Jedoch ist hier am Markt für Massenware die Auswahl an geeigneten Tripletts auch sehr beschränkt, welche außerdem in der Regel auch die Kosten eines gekitteten achromatischen Linsen-Dubletts vom Massenmarkt bei Weitem übersteigen, insbesondere bei einem Linsendurchmesser von 38mm und größer. Auch hier gilt ganz besonders, dass eine kundenspezifische Fertigung von Tripletts für eine Kleinserie in der Regel aus Kostengründen überhaupt keine Alternative zu lichtsammelnden, gekitteten, achromatischen Linsen-Dubletts vom Massenmarkt darstellt.

Bevorzugt sind in Anordnung zur Erzeugung eines beabstandeten, einstellbaren Lichtfeldes für die Makrofotografie in der Abbildungsstufe anstelle nur einer lichtsammelnden, achromatischen Linsengruppe zwei lichtsammelnde, gekittete achromatische Linsen-Dubletts mit dem Optikdesign jeweils einseitig für einen Strahlengang nach Unendlich mit einer Brennweite größer/gleich 80mm und kleiner/gleich 200mm ausgebildet.

Weiterhin kommen hier bevorzugt die lichtsammelnden, gekitteten achromatischen Linsen-Dubletts mit sphärischen Linsen als lichtsammelnde, achromatische Linsengruppen zum Einsatz. Diese Linsen-Dubletts sind in der Regel mit einem optischen Design auf einer Seite nach Unendlich ausgebildet und sind kommerziell in großer Auswahl am Massenmarkt verfügbar und ermöglichen ein Optikdesign mit verringerten Aberrationen. Die stärker gekrümmten Linsenflächen der beiden lichtsammelnden, gekitteten achromatischen Linsen-Dubletts sind hierbei in einer Anordnung zur Erzeugung eines beabstandeten, einstellbaren Lichtfeldes für die Makrofotografie einander zugekehrt.

Weiterhin weisen die beiden lichtsammelnden, gekitteten achromatischen Linsen-Dubletts in der Abbildungsstufe der Anordnung zur Erzeugung eines beabstandeten, einstellbaren Lichtfeldes für die Makrofotografie bevorzugt eine unterschiedliche Brennweite auf, die jeweils größer/gleich 80mm ist und das Verhältnis von deren Brennweiten kann mit Vorzug zwischen 0,7 und 2 liegen.

Weiterhin ist es möglich, dass in der Anordnung zur Erzeugung eines beabstandeten, einstellbaren Lichtfeldes die beiden lichtsammelnden, gekitteten, achromatischen Linsen-Dubletts in der Abbildungsstufe vorzugsweise jeweils eine Brennweite von 120mm aufweisen. Dies ermöglicht, wenn die Abschattblende im Fokus des ersten achromatischen Linsen-Dubletts steht, einen freien Arbeitsabstand a - je nach konstruktiver Gestaltung der Abbildungsstufe - von näherungsweise 105mm bis 110mm. Insbesondere ergibt sich bei einem Durchmesser dieser gekitteten, achromatischen Linsen-Dubletts von 50mm eine sehr hohe Beleuchtungsstärke im Lichtfeld, wenn auch die Randschärfe nicht mehr sehr gut ist. Hier kann gegebenenfalls mit einer Aperturblende in, vor oder nach der Abbildungsstufe zu Gunsten einer besseren Randschärfe etwas abgeblendet werden, beispielsweise auf einen Durchmesser von 40mm. Es können aber auch vorzugsweise gekittete, achromatische Linsen-Dubletts mit einem Durchmesser von 40mm zur Anwendung kommen.

Weiterhin ist es möglich, dass in der Anordnung zur Erzeugung eines beabstandeten, einstellbaren Lichtfeldes vorzugsweise eines der beiden lichtsammelnden, gekitteten, achromatischen Linsen-Dubletts in der Abbildungsstufe eine Brennweite von 100mm und das andere eine Brennweite von 120mm aufweist. Damit kann der freie Arbeitsabstand auf weniger als 110mm eingestellt werden.

Weiterhin ist es möglich, dass in der Anordnung zur Erzeugung eines beabstandeten, einstellbaren Lichtfeldes das erste der beiden lichtsammelnden, gekitteten, achromatischen Linsen-Dubletts in der Abbildungsstufe bevorzugt eine Brennweite von 100mm und das zweite Linsen-Dubletts in der Abbildungsstufe bevorzugt eine Brennweite von 120mm aufweist und die Abschattblende nicht im Brennpunkt des ersten, gekitteten, achromatischen Linsen-Dubletts angeordnet ist. So kann bei der Abbildung der Abschattblende bei dem kürzerbrennweitigen, lichtsammelnden, gekitteten, achromatischen Linsen-Dublett eine extrafokale und bei dem längerbrennweitigen Dublett eine intrafokale Lage bestehen. Auch diese Kombination von lichtsammelnden, gekitteten, achromatischen Linsen-Dubletts mit einer intra- oder einer extrafokalen Lage von Abschattblende und Lichtfeld gestattet eine 1:1-Abbildung der Abschattblende, die für eine Beleuchtungsaufgabe hinsichtlich der Abbildungsgüte noch akzeptabel ist.

Weiterhin ist es möglich, dass in der Anordnung zur Erzeugung eines beabstandeten, einstellbaren Lichtfeldes die Abschattblende bevorzugt mit einer extrafokalen Ablage af zum Brennpunkt des ersten lichtsammelnden, gekitteten, achromatischen Linsen-Dubletts in der Abbildungsstufe mit einem Betrag af von bis zu 15mm angeordnet ist, wenn die Brennweite der achromatischen Linsen-Dubletts in der Abbildungsstufe zwischen 100mm und 120mm liegt. Das ergibt zwar keine sehr gute Abbildung der Abschattblende und diese ist auch etwas schlechter als bei der fokalen Lage derselben, jedoch ist diese leicht asymmetrische Anordnung in der Regel immer noch geeignet, um einen Linienkontrast K im Randbereich des Lichtfeldes größer/gleich 0,5 für 10 Linienpaare pro Millimeter zu erreichen, wenn die außerfokale Ablage af in der Größenordnung mit dem Betrag unter 15mm liegt und das Lichtfeld einen Durchmesser kleiner/gleich 12 Millimeter aufweist. Typischerweise sollte hier die Ablage af zum Brennpunkt jedoch bevorzugt unter 10mm liegen.

In einem weiteren Aspekt ist den beiden lichtsammelnden, gekitteten, achromatischen Linsen-Dubletts in der Abbildungsstufe vorzugsweise eine dünne Zusatzlinse beigeordnet, deren Betrag der Brechkraft bevorzugt zwischen 0,5 Dioptrien und 2,0 Dioptrien liegt. Diese Kombination von zwei lichtsammelnden, gekitteten, achromatischen Linsen-Dubletts und einer dünnen Zusatzlinse, die zu den beiden Linsen-Dubletts separat angeordnet ist, ermöglicht grundsätzlich bei entsprechender Wahl der Brechkraft dieser Zusatzlinse eine Abbildung mit einem Betrag des Abbildungsmaßstabes von eins mit einer guten Annäherung, beispielsweise mit einer Abweichung vom Betrag eins im unteren einstelligen Prozentbereich. Dies kann durch eine positive Brechkraft dieser dünnen Zusatzlinse erreicht werden, was zu einer Verkleinerung des freien Abstandes vom letzten lichtsammelnden, gekitteten, achromatischen Linsen-Dublett zum Lichtfeld führt. Bei einer Verkleinerung des freien Abstandes ist auch eine sehr erwünschte Erhöhung der Beleuchtungsstärke im Lichtfeld gegeben.

Es kann jedoch durch eine dünne Zusatzlinse mit negativer Brechkraft auch eine Vergrößerung des freien Abstandes vom letzten lichtsammelnden, gekitteten, achromatischen Linsen-Dublett zum Lichtfeld erreicht werden. Dies kann sinnvoll sein, wenn die beiden lichtsammelnden, gekitteten, achromatischen Linsen-Dubletts nur eine Brennweite von 100mm aufweisen. Ein größerer Betrag der Brechkraft der dünnen Zusatzlinse als vom Betrag 2,0 Dioptrien führt in der Regel zu nicht mehr tolerierbaren sphärischen Aberration und Farbfehlern bei der Abbildung der Abschattblende, deren Bild das Lichtfeld ist. Das hat zur Folge, dass die Forderung für den Linienkontrast K im Randbereich des Lichtfeldes größer/gleich 0,5 für 10LP/mm nicht mehr mit Sicherheit erfüllt werden kann, wobei das Lichtfeld hier einen Durchmesser kleiner/gleich 12 Millimeter aufweist.

Es ist von Vorteil, wenn der Werkstoff der dünnen Zusatzlinse vorzugsweise mit einer Abbe-Zahl größer/gleich 56 hergestellt ist. Denn, eine hohe Abbe-Zahl bedingt weniger unerwünschte chromatische Effekte infolge einer geringen Farbzerstreuung und verringert so die Gefahr der Entstehung von Farbsäumen am Rand des Lichtfeldes, die sehr unerwünscht sind. Die Forderung für den Linienkontrast K im Randbereich des Lichtfeldes größer/gleich 0,5 für 10LP/mm kann somit auch besser erfüllt werden.

Eine besonders vorteilhafte Anordnung ergibt sich, wenn in der Anordnung zur Erzeugung eines beabstandeten, einstellbaren Lichtfeldes die dünne Zusatzlinse vorzugsweise als Sammellinse ausgebildet ist. Das ergibt eine etwas größere Beleuchtungsstärke und es ist durch Wahl der Brechkraft dieser Sammellinse die Einstellung eines genau vorgegebenen freien Abstandes aL möglich, da diese Sammellinsen hinsichtlich ihrer Brechkraft in sehr feiner Abstufung und kostengünstig aus dem Bereich der Brillenoptik erhältlich sind. Denn die verfügbaren kostengünstigen lichtsammelnden, gekitteten, achromatischen Linsen-Dubletts als Katalogware sind nur mit einer vergleichsweise groben Staffelung der Werte der verfügbaren Brennweiten erhältlich, so dass mit diesen ein geforderter freier Abstand aL zum Lichtfeld nicht immer exakt erreicht werden kann. Das gilt auch für den Fall eines freien Abstandes aL zum Lichtfeld von 100mm.

Andererseits kann die dünne Zusatzlinse mit Vorzug auch als Zerstreuungslinse ausgebildet sein. Damit ist die Einstellung eines genau vorgegebenen, jedoch größeren freien Abstandes aL - als mit den beiden lichtsammelnden, gekitteten, achromatischen Linsen-Dubletts allein - möglich.

Die dünne Zusatzlinse kann vorzugsweise auch in Meniskenform ausgebildet sein. Dann ist vorzugsweise deren Linsenbauch jeweils einem lichtsammelnden, gekitteten, achromatischen Linsen-Dublett zugewandt. Das minimiert Aberrationen bei der Abbildung der Abschattblende.

Die dünne Zusatzlinse kann vorzugsweise aus dem kostengünstigen duroplastischen Kunststoff Polyallyldiglycolcarbonat (CR-39) für Brillengläser gefertigt sein und stellt bevorzugt eine Brillenlinse dar. Dieser duroplastischen Kunststoff CR39 hat eine Abbe-Zahl von 58 und weist somit eine vergleichsweise geringe Dispersion auf.

Die dünne Zusatzlinse kann aber auch bevorzugt aus Mineralglas ausgebildet sein, deren Abbe-Zahl größer/gleich 56 beträgt, und stellt ebenfalls bevorzugt eine Brillenlinse dar. Linsen aus Mineralglas erweisen sich als etwas kratzfester und formstabiler als Linsen aus einem duroplastischen Kunststoff. Wenn die dünne Zusatzlinse in Meniskenform in der Abbildungsstufe in Strahlrichtung vor dem ersten lichtsammelnden, gekitteten, achromatischen Linsen-Dublett bevorzugt mit ihrem Linsenbauch zum ersten lichtsammelnden, gekitteten, achromatischen Linsen-Dublett hin angeordnet ist, verringert dies bei der Abbildung der Abschattblende die Aberrationen.

Weiterhin kann in Anordnung zur Erzeugung eines beabstandeten, einstellbaren Lichtfeldes für die Makrofotografie die dünne Zusatzlinse in Meniskenform bevorzugt mit einer Brechkraft von +1,5 Dioptrien ausgebildet sein. Dies kann in Verbindung mit zwei lichtsammelnden, gekitteten, achromatischen Linsen-Dubletts - vorzugsweise mit einer Brennweite von 120mm - einen freien Arbeitsabstand aL von näherungsweise 100mm bei einem Betrag des Abbildungsmaßstabes der Abbildungsstufe von eins ermöglichen. Die Anordnung einer dünne Zusatzlinse als Sammellinse und in Meniskenform ergibt außerdem etwas verbesserte Lichtausbeute durch eine Erhöhung der numerischen Apertur und führt nur geringe Aberrationen in die Abbildungsstufe mit zwei lichtsammelnden, gekitteten, achromatischen Linsen-Dubletts ein.

Weiterhin kann bei der Anordnung zur Erzeugung eines beabstandeten, einstellbaren Lichtfeldes für die Makrofotografie die hochaperturige Sammellinse mit einer numerischen Apertur von 0,8 und einer positiven Brennweite gleich 7,5mm ausgebildet sein. Dies ergibt eine hohe Beleuchtungsstärke im Lichtfeld bei der Abbildung der Abschattblende mit einem Durchmesser bei einer kreisförmigen Form oder einer lateralen Ausdehnung bei einer beliebigen Form kleiner/gleich 8mm.

Bei einer Abschattblende mit einem Durchmesser bei einer kreisförmigen Form oder einer lateralen Ausdehnung bei einer beliebigen Form größer/gleich 8mm ist die hochaperturige Sammellinse vorzugsweise mit einer numerischen Apertur von 0,8 und einer positiven Brennweite gleich 20mm ausgebildet. Dies ergibt eine angepasste Beleuchtungsstärke im Lichtfeld bei der Abbildung der Abschattblende.

Es ist von großem Vorteil, wenn in der Anordnung zur Erzeugung eines beabstandeten, einstellbaren Lichtfeldes für die Makrofotografie als Leuchtelement vorzugsweise mindestens eine LED mit einem CRI-Wert größer/gleich 95 angeordnet ist. So wird eine korrekte Farbwiedergabe schon recht gut angenähert. Besser ist jedoch, eine LED mit einem CRI-Wert größer/gleich 97 oder gar 98 einzusetzen.

Weiterhin ist in der Anordnung zur Erzeugung eines beabstandeten, einstellbaren Lichtfeldes für die Makrofotografie die LED vorzugsweise als eine Single-cell-LED ausgebildet, die vorzugsweise kreisförmig ist. Dies ermöglicht ein besonders homogenes Lichtfeld.

Die Gefahr des Entstehens eines sehr unerwünschten Lichthofs um das Lichtfeld ist in einer Anordnung zur Erzeugung eines beabstandeten, einstellbaren Lichtfeldes für die Makrofotografie sehr groß, wenn der lichte Durchmesser im Blendenmodul unmittelbar nach der Abschattblende strahlabwärts zu klein ist, auch wenn der Blendentubus innen geschwärzt ist. Ein Lichthof entsteht, wenn das Licht unmittelbar nach der Abschattblende, also vergleichsweise weit von der Linsenoptik entfernt, am Blendentubus streifend reflektiert wird, was durch eine geringe lichte Weite des Blendentubus sehr begünstigt wird. Vorzugsweise soll deshalb die lichte Weite des Blendentubus mindestens dem Durchmesser des ersten lichtsammelnden, gekitteten, achromatischen Linsen-Dubletts entsprechen. Bevorzugt soll auch der lichte Durchmesser in der Abbildungsstufe vor diesem ersten lichtsammelnden, gekitteten, achromatischen Linsen-Dublett mindestens dem Durchmesser desselben entsprechen. Dies beugt Entstehung eines Lichthofs um das Lichtfeld vor.

Es ist von großem Vorteil hinsichtlich der Flexibilität der Anordnung zur Erzeugung eines beabstandeten, einstellbaren Lichtfeldes für die Makrofotografie, wenn die Abschattblende vorzugsweise als stellbare Irisblende ausgebildet ist. Damit kann der Durchmesser des Lichtfeldes - je nach Ausbildung der Irisblende - in weiten Grenzen eingestellt werden und bevorzugt im Bereich von 1mm bis 12 mm.

Weiterhin ist in der Anordnung zur Erzeugung eines beabstandeten, einstellbaren Lichtfeldes für die Makrofotografie die Abschattblende bevorzugt mit mindestens zwei schiebbaren, ebenen Blendenlamellen ausgebildet. Damit kann das Lichtfeld eingeengt werden, um bei der makrofotografischen Aufnahme nur bestimmte Details des Fotoobjekts gezielt beleuchten zu können, beispielsweise eine Objektkante.

Noch mehr Flexibilität ergibt sich bei der Makrofotografie, wenn bei der Anordnung zur Erzeugung eines beabstandeten, einstellbaren Lichtfeldes für die Makrofotografie die Abschattblende bevorzugt als ein einschiebbares und frei mit Öffnungen gestaltetes, ebenes dünnes Blech ausgebildet ist. Damit können Details gezielt beleuchtet werden. Dazu kann für ein bestimmtes Fotoobjekt ein objektangepasstes dünnes Blech als Abschattblende mittels rechnergestützter Bearbeitung hergestellt werden.

Dabei kann in der Anordnung zur Erzeugung eines beabstandeten, einstellbaren Lichtfeldes für die Makrofotografie die ebene, einschiebbare Abschattblende vorzugsweise auch mit mehreren Öffnungen im Blech ausgebildet sein, die nicht verbunden sind. Diese Abschattblende kann auch vorzugsweise eine Wabenstruktur aufweisen. So können mehrere und verschiedene Bereiche auf dem Fotoobjekt einzeln gezielt beleuchtet werden. Diese Abschattblende kann vorzugsweise objektangepasst hergestellt sein, um beispielsweise auch Serienprodukte im Durchlauf auf Fehler zu prüfen.

Vorzugsweise ist in der Abbildungsstufe zusätzlich zu den beiden achromatischen, lichtsammelnden Linsengruppen eine achromatische, lichtsammelnde Linsengruppe mit einer Brennweite größer/gleich 250mm und kleiner 750mm angeordnet. Dies kann im Vergleich zu einer dünnen Linse die Abbildungsleistung der Abbildungsstufe und somit auch die Randschärfe des Lichtfeldes verbessein.

Bevorzugt ist in der Anordnung zur Erzeugung eines beabstandeten, einstellbaren Lichtfeldes für die Makrofotografie die Abbildungsstufe mit nur einer lichtsammelnden, achromatischen Linsengruppe ausgebildet. So kann vorzugsweise in der Abbildungsstufe auch nur ein einziges lichtsammelndes, gekittetes, achromatisches Linsen-Dublett mit bevorzugt sphärischen Linsenflächen für eine zumindest näherungsweise 1:1-Abbildung der Abschattblende angeordnet sein. Diese sehr einfache Anordnung ist jedoch nur sehr bedingt zur Erzeugung eines randscharfen Lichtfeldes geeignet, insbesondere mit einem nach Unendlich korrigierten achromatisches Linsen-Dublett, kann aber unter Inkaufnahme einer vergleichsweise geringen Abbildungsgüte als eine vergleichsweise kostengünstige Anordnung genutzt werden. Bevorzugt kann auch diesem einzelnen lichtsammelndes, gekittetes, achromatisches Linsen-Dublett eine dünne Zusatzlinse beigeordnet sein. Diese dünne Zusatzlinse ist bevorzugt auf der Seite mit der stärkeren Linsenkrümmung des lichtsammelndes, gekittetes, achromatisches Linsen-Dublett angeordnet und kann auch bevorzugt in Meniskenform ausgebildet sein Das verteilt dann die benötigte Brechkraft zur Abbildung der Abschattblende, die als Irisblende ausgebildet sein kann, auf zwei optische Komponenten, was die Abbildungsgüte der Abbildungsstufe noch etwas verbessern kann. Bevorzugt kann aber auch eine Linsenfläche bei diesem einzeln genutzten lichtsammelnden, gekitteten, achromatischen Linsen-Dublett asphärisch ausgebildet sein, was die Abbildungsgüte bei einer zumindest näherungsweisen 1:1-Abbildung der Abschattblende erhöhen kann, wenn dieses lichtsammelnde, gekittete, achromatische Linsen-Dublett speziell dafür in der Optikrechnung ausgelegt ist. Für die Bildverarbeitung ist ein derartiges lichtsammelndes, gekittetes, achromatisches Linsen-Dublett eher unbekannt, da die Abbildungsgüte dieses modifizierten Dubletts für die Bildverarbeitung beim Stand der Technik in der Regel nicht mehr genügt.

Gekittete, achromatische Linsen-Dubletts mit sphärischen Linsenflächen und einseitiger Auslegung nach Unendlich werden von mehreren Herstellern vergleichsweise kostengünstig angeboten, da diese auch in handelsüblichen Ferngläsern vielfach Anwendung finden. Diese Standard-Linsen-Dubletts haben dabei üblicherweise eine asymmetrische Bauform mit einer stärker gekrümmte Linsenfläche auf einer Seite und diese Seite ist nach Unendlich ausgelegt. Ist dabei diese stärker gekrümmte Linsenfläche dieses achromatischen Linsen-Dubletts der Abschattblende zugeordnet, beträgt für eine 1:1-Abbildung der Abschattblende der Abstand des Linsenscheitels zur Abschattblende näherungsweise das Zweifache der Brennweite dieses Linsen-Dubletts. Für eine Brennweite dieses achromatischen Linsen-Dubletts von 60mm und einem Durchmesser von 40mm beträgt der Abstand des Linsenscheitels zur Abschattblende demzufolge dann näherungsweise 120mm. Es ist auch möglich, dass die schwächer gekrümmte Seite dieses lichtsammelndes, gekittetes, achromatisches Linsen-Dubletts zur Abschattblende zeigt. Dann beträgt bei der üblichen asymmetrischen Bauform der gekitteten, achromatischen Linsen-Dubletts bei einer Brennweite von 60mm und einem Durchmesser von 40mm wegen der Lage der Hauptebene tief im Inneren des achromatisches Linsen-Dubletts nur näherungsweise 110mm. Die Forderung für den Linienkontrast K im Randbereich des Lichtfeldes größer/gleich 0,5 für 10LP/mm kann in vielen Fällen - je nach Optikdesign und Auslegung der Anordnung, insbesondere bei einem gekitteten, achromatischen Linsen-Dublett mit einer deutlich größeren Brennweite als 60mm - gerade noch erfüllt werden. Wenn nicht, muss der Durchmesser des gekittetes, achromatisches Linsen-Dubletts auf beispielsweise etwa 25mm verringert oder die Brennweite deutlich vergrößert werden, beispielsweise auf 90mm.

Wie schon ausgeführt, kann sich eine deutliche Verbesserung der Abbildungsgüte bei der Anwendung eines achromatisches Linsen-Dubletts mit einer asphärischen Linsenfläche ergeben, wenn dieses Linsen-Dublett für die Abbildung mit dem Betrag des Abbildungsmaßstabes zwischen 0,7 und 2 und insbesondere für die 1:1-Abbildung für Beleuchtungszwecke optimiert ist. Jedoch sind vergleichsweise kostengünstige achromatische Linsen-Dubletts vom Massenmarkt mit einer asphärischen Linsenfläche in der Regel nach Unendlich korrigiert und stehen als Massenprodukt nicht zur Verfügung, da die Abbildungsgüte eines einzelnen achromatischen Linsen-Dubletts für eine 1:1-Abbildung auch mit einer asphärischen Fläche für Bildverarbeitungsaufgaben in der Regel immer noch zu gering ist. Vorzugsweise kann für Beleuchtungszwecke das Optikdesign für ein einzelnes lichtsammelndes, gekittetes, achromatisches Linsen-Dublett mit einer asphärischen Linsenfläche aber auch für die Abbildung mit dem Betrag des Abbildungsmaßstabes zwischen 0,7 und 2 optimiert sein. Das stellt hinsichtlich der Abbildungsgüte einen erheblichen Kompromiss dar, kann aber für die Erzeugung eines Lichtfeldes für Beleuchtungszwecke noch tolerierbar sein. Es kann also von Vorteil sein, wenn in der Anordnung zur Erzeugung eines beabstandeten, einstellbaren Lichtfeldes für die Makrofotografie wenigstens eine Linsenfläche einer lichtsammelnden, achromatischen Linsengruppe in der Abbildungsstufe mit einer asphärischen Fläche ausgebildet ist. Diese asphärische Fläche kann vorzugsweise durch eine Kunststoffbeschichtung hergestellt sein. Dies kann die Abbildungsleistung und somit auch die Randschärfe des Lichtfeldes erhöhen. Dabei kann insbesondere eine asphärische Fläche auf einem lichtsammelnden, gekitteten, achromatischen Linsen-Dublett zum Einsatz kommen, wenn nur ein einziges achromatisches Linsen-Dublett in der Abbildungsstufe für die Abbildung mit dem Betrag des Abbildungsmaßstabes zwischen 0,7 und 2 angeordnet ist.

In einem weiteren Aspekt kann in der Anordnung zur Erzeugung eines beabstandeten, einstellbaren Lichtfeldes für die Makrofotografie in der Abbildungsstufe vorzugsweise ein Triplett-Achromat mit mindestens 38mm Durchmesser und mindestens 50mm Brennweite angeordnet sein. Das kann ein Triplett-Achromat nach Steinheil, Cooke oder Hastings sein. Der Triplett-Achromat dient zur Bildung eines scharf berandeten Lichtfeldes, welches im Ergebnis der Abbildung der Abschattblende entsteht.

Weiterhin kann bevorzugt bei der Anordnung zur Erzeugung eines beabstandeten, einstellbaren Lichtfeldes für die Makrofotografie der Triplett-Achromat als gekitteter Steinheil-Triplett-Achromat und mit mindestens 50mm Brennweite ausgebildet sein. Dieser Steinheil-Triplett-Achromat wird

dann bevorzugt mit einem Abbildungsmaßstab mit dem Betrag von zumindest näherungsweise 1 bei einer Brennweite von näherungsweise 60mm genutzt. Dies ermöglicht eine gute Abbildungsqualität für ein Lichtfeld. Ein Steinheil-Triplett ist jedoch für einen Durchmesser gleich oder oberhalb 40mm beim Stand der Technik nur auf Sonderanfertigung erhältlich und damit nicht sehr kostengünstig.

Weiterhin können bevorzugt bei der Anordnung zur Erzeugung eines beabstandeten, einstellbaren Lichtfeldes für die Makrofotografie auch zwei gekittete Steinheil Triplett-Achromate mit mindestens 38mm Durchmesser und mit einer Brennweite größer/gleich 80mm und kleiner/gleich 200mm angeordnet sein. Dies ermöglicht eine besonders gute Abbildungsqualität für ein Lichtfeld.

Weiterhin können bevorzugt bei der Anordnung zur Erzeugung eines beabstandeten, einstellbaren Lichtfeldes für die Makrofotografie auch zwei gekittete Hastings Triplett-Achromate mit mindestens 38mm Durchmesser und mit einer Brennweite größer/gleich 80mm und kleiner/gleich 200mm angeordnet sein. Auch dies ermöglicht eine besonders gute Abbildungsqualität für ein Lichtfeld. Aber auch hier gilt, dass für Hastings-Tripletts für einen Durchmesser gleich oder oberhalb 38mm beim Stand der Technik keine Verfügbarkeit als Massenware am Markt gegeben ist. Somit ist eine Sonderanfertigung notwendig und damit sind Hastings Triplett-Achromate nicht sehr kostengünstig erhältlich.

Die Abschattblende kann bevorzugt zumindest näherungsweise in der hinteren Brennebene der hochaperturigen, asymmetrischen Sammellinse angeordnet sein. Da der Fluid-Lichtleiter - mit Lage seines Austrittsfensters in der vorderen Brennebene der hochaperturigen, asymmetrischen Sammellinse - das Licht sehr gleichmäßig abstrahlt, kann sich in der hinteren Brennebene der hochaperturigen, asymmetrischen Sammellinse eine gleichmäßige Lichtverteilung ergeben, auch wenn sich Partikel, Kratzer oder gar kleine Ausbrüche auf dem Austrittsfenster des Fluid-Lichtleiters befinden. Durch die bevorzugte Lage der Abschattblende in der hinteren Brennebene der hochaperturigen, asymmetrischen Sammellinse verringert sich die Beleuchtungsstärke vom Zentrum zum Rand des ausgeleuchteten Feldes nur vergleichsweise geringfügig und ist insbesondere gleichmäßig, was sehr vorteilhaft für die Beleuchtung eines Objekts für die Makrofotografie ist.

### Beschreibung der Figuren

Die Erfindung wird beispielhaft anhand der Figuren 1 bis 11 und mit 5 Ausführungsbeispielen ohne Figur beschrieben.

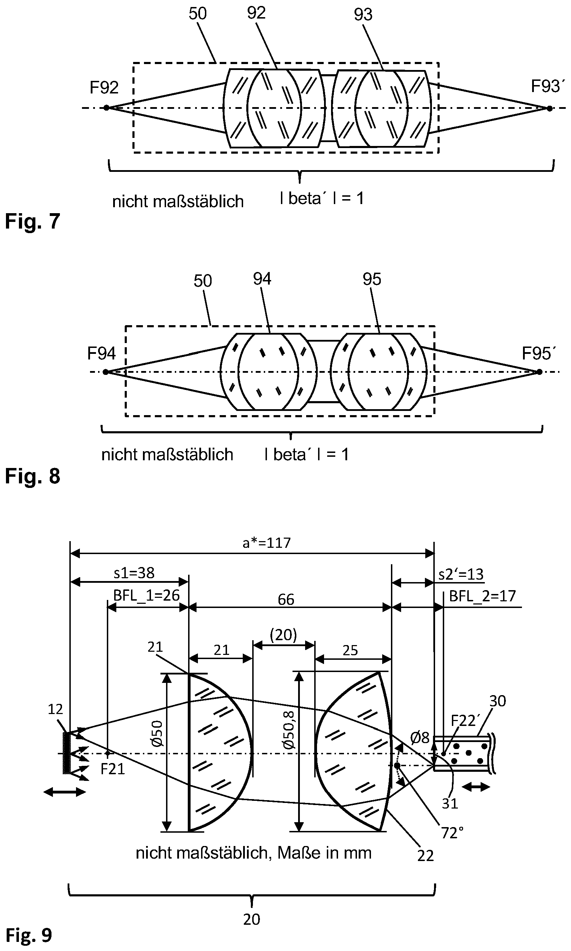

Die Figur 1 stellt eine Anordnung zur Erzeugung eines scharf berandeten Lichtfeldes mit einem freien Arbeitsabstand von 110mm dar. Die Dauerlichtquelle 10 weist eine Stromversorgung 11 mit der Leistungsaufnahme von 75W aus der ultrakompakten HEDLER Profilux LED650 auf, welche die Hochleistungs-Single-cell LED 12 versorgt. Von der Hochleistungs-Single-cell LED 12 wird weißes Licht der Farbtemperatur von 5600K mit einem Color Rendering Index (CRI) größer 96 abgestrahlt. Dieses Licht gelangt in das optische Kopplungsmodul 20, welches die beiden lichtstarken asphärischen Linsen 21 und 22 aufweist. Diese asphärischen Linsen 21 und 22 sind auch in der Figur 9 noch einmal dargestellt und in deren Beschreibung erläutert. Das Kopplungsmodul 20 ermöglicht, das Licht von der LED 12 in das Eintrittsfenster 31 des Fluid-Lichtleiters 30 zu fokussieren. Über den Fluid-Lichtleiter 30 und dessen Austrittsfenster 32, in dessen Zentrum sich der vordere Brennpunkt F41 der hochaperturigen, asymmetrischen Sammellinse 41 befindet, gelangt das Licht in den Blendentubus 40. Die Linse 41 im Blendentubus 40 sammelt das aus dem Austrittsfenster 32 austretende Licht, welches die Blendenebene BE voll ausleuchtet. Die Abschattblende 42 ist in der hinteren Brennpunkt F41' der hochaperturigen, asymmetrischen Sammellinse 41 angeordnet. Diese Abschattblende 42 ist hier für spezielle Aufgaben als Festblende ausgebildet und besitzt einen Blendendurchmesser von 1mm. Dem Blendentubus 40 mit der Abschattblende 42 ist die Abbildungsstufe 50 nachgeordnet, welche hier mit den beiden lichtsammelnden, gekitteten, achromatischen Linsendubletts 51 und 52 für einen Abbildungsmaßstab beta' mit dem Betrag 1 ausgebildet ist. Diese beiden lichtsammelnden, gekitteten, achromatischen Linsendubletts 51 und 52 werden von der Firma Qioptic unter der Bezeichnung Achromat VIS, Positiv, ungefasst mit der Bestellnummer G322388000 jeweils mit einem Durchmesser von 40mm und jeweils einer Brennweite f' von 120mm angeboten.

Die Abschattblende 42 steht dabei im vorderen Fokus F51 des lichtsammelnden, gekitteten, achromatischen Linsendubletts 51 und so ergibt sich die Lage des Lichtfeldes 60 im hinteren Fokus F52' des lichtsammelnden, gekitteten, achromatischen Linsendubletts 52. Das Lichtfeld 60 ist hier aus Gründen der Anschaulichkeit vergrößert dargestellt. Die Scheitelbrennweite s52' des lichtsammelnden, gekitteten, achromatischen Linsendubletts 52 beträgt hier 113.6mm. Vom bildseitigen Scheitelpunkt S52' zum vorderen mechanischen Anschlag 53 der Fassung der Abbildungsstufe 50 sind es hier näherungsweise 5,5mm. So ergibt sich rechnerisch näherungsweise ein freier Arbeitsabstand a=108mm zwischen dem vorderen Anschlag 53 der Fassung der Abbildungsstufe 50 und dem Lichtfeld 60 in der Ebene LSE. Das Lichtfeld 60 mit dem Halbwert-Durchmesser HWD entsteht in der Ebene LSE mit der besten Randschärfe. Dort befindet sich auch ein hier nicht dargestelltes Objekt für die fotografische Makro-Aufnahme, welche mittels eines Fotoobjektivs 70 durchgeführt wird, dessen Schärfeebene SE das Lichtfeld 60 zumindest näherungsweise enthält. Der Bereich vor der Frontlinse 71 des Fotoobjektivs 70 wird wegen des vergleichsweise großen freien Abstandes a von 108mm durch die Abbildungsstufe 50 nicht abgeschattet und es gibt im Bereich A, der den Bereich mit möglichen Platzproblemen darstellt, kein mechanisches Berühren von Abbildungsstufe 50 und dem Fotoobjektiv 70. Diese Platzprobleme können zwischen der Frontlinse 71 des Fotoobjektivs 70 und dem Frontbereich der Abbildungsstufe 50 bei der Erzeugung eines Lichtfeldes 60 bestehen, wenn der freie Abstand zu gering ist.

In einem ersten Ausführungsbeispiel nach Figur 1, jedoch ohne eigene Figur, sind in der Abbildungsstufe 50 zwei lichtsammelnde, gekittete, achromatische Linsendubletts 51 und 52 mit jeweils 100mm Brennweite angeordnet. Das ergibt bei einer Abbildung mit dem Abbildungsmaßstab mit dem Betrag 1 wegen der Lage der bildseitigen Hauptebene in der Tiefe des gekitteten, achromatischen Linsendubletts 52 einen freien Arbeitsabstand a von etwas unter 90mm. Dieser freien Arbeitsabstand a von unter 90mm wird für viele Aufnahme-Situationen jedoch schon als zu gering für ein optimalen Fotografieren im Makrobereich mit großen Spiegelreflex-Kameras angesehen.

In Figur 2 sind in der Abbildungsstufe 50 zwei lichtsammelnde, gekittete, achromatische Linsendubletts 51 und 52 mit etwas unterschiedlichen Brennweiten angeordnet. Das Linsendublett 51 weist eine Brennweite von f51' = 100mm und das lichtsammelnde, gekittete, achromatische Linsendublett 52 weist dagegen f52 ' = 120mm Brennweite auf. Die Abschattblende 42 ist hier als eine Irisblende 43 mit einem minimalen Blendendurchmesser von 1mm ausgebildet. Der gewünschte freie Arbeitsabstand a des Lichtfeldes 60 vom vorderen mechanischen Anschlag 53 der Fassung der Abbildungsstufe 50 von näherungsweise 100mm wird durch eine vergleichsweise kleine extrafokale Lage af der Irisblende 43 - in Bezug auf den Brennpunkt F51 - von näherungsweise af = 6mm erreicht. Die außerfokale Ablage af bezeichnet die Entfernung zu einem Brennpunkt F. Dabei liegt das Lichtfeld 60 dann bildseitig intrafokal in Bezug auf den Brennpunkt F52' des zweiten lichtsammelnden, gekitteten, achromatischen Linsendubletts 51. Das ergibt dann einen Betrag des Abbildungsmaßstabes von näherungsweise 1,05. Die kleine extrafokale Lage af der Irisblende 43 verschlechtert zwar die Abbildungsgüte im Vergleich zur fokalen Lage etwas. Jedoch handelt es sich hier um Beleuchtungsoptik und nicht um die Abbildung mit den Ansprüchen hinsichtlich Abbildungsgüte der Fotografie oder gar der Mikroskopie und so kann diese Verschlechterung der Abbildungsgüte in der Regel noch gut akzeptiert werden.

In einem zweiten Ausführungsbeispiel nach Figur 2, jedoch ohne eigene Figur, ist in der Abbildungsstufe 50 das erste lichtsammelnde, gekittete, achromatische Linsendublett 51 mit einer Brennweite f51' von 120mm und das zweite lichtsammelnde, gekittete, achromatische Linsendublett 52 mit einer Brennweite f52' von 100mm ausgebildet. Auch hier besteht die Möglichkeit, einen freien Arbeitsabstand a des Lichtfeldes 60 vom vorderen mechanischen Anschlag 53 der Fassung der Abbildungsstufe 50 von näherungsweise 100mm einzustellen, jedoch übersteigt die dabei intrafokale afokale Ablage af in Bezug zum Brennpunkt F51 dann bereits den Wert von 10mm deutlich, was für die Abbildungsgüte nicht unbedingt von Vorteil ist, aber für die Beleuchtungsaufgabe meist noch tolerierbar ist. Auch ist dabei ein Betrag des Abbildungsmaßstabes beta' der Irisblende 43 nicht mit einer guten Annäherung an eins - also im Bereich einer Annäherung von unter 1% - erreichbar.

Die Figur 3 stellt eine weitere Anordnung zur Erzeugung eines scharf berandeten Lichtfeldes 60 mit einem freien Arbeitsabstand a von 100mm dar. Die Brennweite der lichtsammelnden, gekitteten, achromatischen Linsendubletts 51 und 52 in der Abbildungsstufe 50 beträgt hierbei jeweils f51'=f52'=120mm. Im Gegensatz zum Ausführungsbeispiel in Figur 1 ist hier in der Abbildungsstufe 50 eine dünne Zusatzlinse 80 angeordnet. Diese Zusatzlinse 80 ist hier als eine sammelnde, entspiegelte Brillenlinse in Meniskusform mit einer Brechkraft von +1,5 Dioptrien ausgebildet und ist aus dem duroplastischen Kunststoff Polyallyldiglycolcarbonat (CR-39) für Brillengläser gefertigt, der eine Abbe-Zahl von 58 aufweist. Eine derartige Brillenlinse ist vergleichsweise kostengünstig und gut beschaffbar.

In einem dritten Ausführungsbeispiel ohne Figur ist eine dünne Sammellinse mit einer Brechkraft von +1,25 Dioptrien, beziehungsweise einer Brennweite 800mm, mittig zwischen den beiden lichtsammelnden, gekitteten, achromatischen Linsendubletts 51 und 52 mit jeweils einer Brennweite f51'= f52'=120mm in der Abbildungsstufe 50 angeordnet. Diese Linse ist als entspiegelte Brillenlinse aus Mineralglas gefertigt und weist den Brechungsindex 1,5 auf. Auch diese Anordnung nähert den Betrag des Abbildungsmaßstabes gut an eins an und ermöglicht auch einen freien Arbeitsabstand aL des Lichtfeldes 60 vom vorderen mechanischen Anschlag 53 der Fassung der Abbildungsstufe 50 von näherungsweise 100mm.

In einem vierten Ausführungsbeispiel ohne Figur ist eine dünne Zerstreuungslinse, also mit einer negativen Brechkraft, als Vorderlinse in Meniskenform vor den beiden lichtsammelnden, gekitteten, achromatischen Linsendubletts 51 und 52 mit den Brennweiten f51 'und f52' von jeweils 120mm in der Abbildungsstufe 50 angeordnet. Dies verringert zwar durch deren Dicke und Fassung den freien Arbeitsabstand zum Lichtfleck 60 geringfügig, ermöglicht jedoch einen schnellen Wechsel der Vorderlinse, wenn der freie Arbeitsabstand aL deutlich vergrößert werden soll, beispielsweise auf 130mm. Dabei ist jedoch eine Verringerung der Beleuchtungsstärke des Lichtfeldes 60 in Kauf zu nehmen. Dabei liegt die Brechkraft dieser Vorderlinse dann bei näherungsweise -1,5 Dioptrien. Jedoch besteht dann keine 1:1-Abildung mehr, sondern eine moderate Vergrößerung des Lichtfeldes 60.

Die Figur 4 stellt eine Anordnung zur Erzeugung eines scharf berandeten Lichtfeldes 60 mit einem freien Arbeitsabstand von 150mm dar. Hier wird auf eine dünne Zusatzlinse verzichtet. In der Abbildungsstufe 50 sind dabei zwei lichtsammelnde, gekittete, achromatische Linsendubletts 51 und 52 mit jeweils mit einer Brennweite f51' und f52' von 160mm angeordnet.

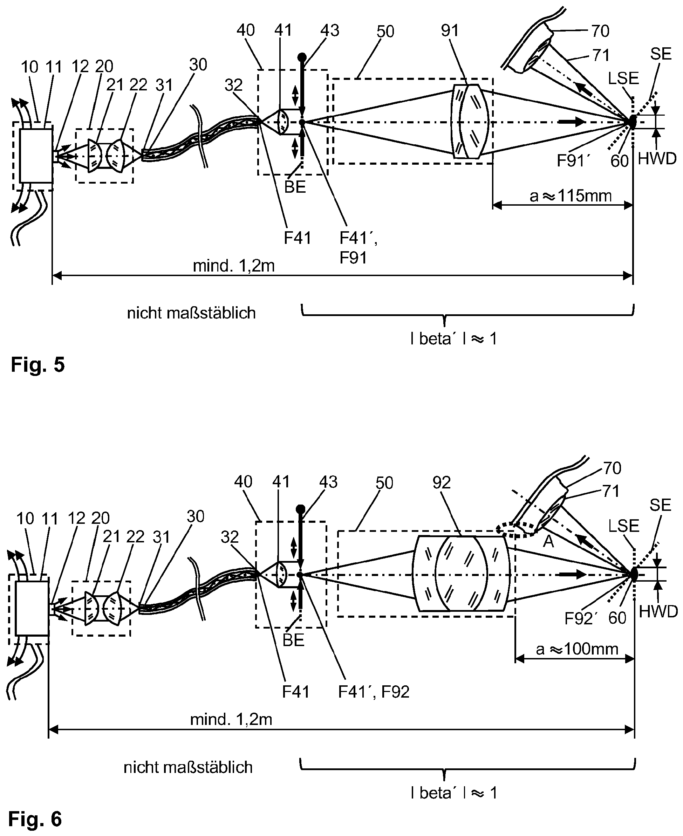

In der Figur 5 ist eine Anordnung mit nur einem einzigen lichtsammelnden, gekitteten, achromatischen Linsendublett 91 in der Abbildungsstufe 50 präsentiert. Dieses lichtsammelnde, gekittete, achromatische Linsendublett 91 besitzt eine Brennweite f91' von 60mm und einen Durchmesser von 40mm. Hierbei ist die Abbildungsgüte allerdings recht begrenzt.

In der Figur 6 ist eine Anordnung mit einem Steinheil-Triplett 92 präsentiert, welches in der Abbildungsstufe 50 eingesetzt werden kann. Die Abbildungsgüte mit einem Steinheil-Triplett 92 übertrifft die mit nur einem einzigen lichtsammelnden, gekitteten, achromatischen Linsendublett 91 bei Weitem.

Die Figur 7 stellt eine Anordnung mit zwei Steinheil-Tripletts 92 und 93 dar, welche in der Abbildungsstufe 50 eingesetzt werden können und welche die Abbildungsgüte noch einmal etwas gegenüber einer Anordnung mit nur einem Steinheil-Triplett verbessern können.

In der Figur 8 wird eine Anordnung mit zwei Hastings- Tripletts 94 und 95 dargestellt, welche in der Abbildungsstufe 50 eingesetzt werden können und welche ebenfalls eine hohe Abbildungsgüte ermöglichen.

Die Figur 9 stellt ein optisches Kopplungsmodul 20 mit zwei lichtstarken, asphärischen Linsen 21 und 22 dar, wobei nur jeweils eine Linsenfläche asphärisch ausgebildet ist. Diese asphärischen Linsen 21 und 22 sind hier mit ihren Linsenbäuchen einander zugekehrt. Die eingesetzten asphärischen Linsen sind Lieferungen von der Firma Thorlabs mit den Bezeichnungen ACL5040U-A und ACL50832U-A. Diese weisen die numerischen Aperturen von 0,6, beziehungsweise letztere von 0,76 auf. Dieses optische Kopplungsmodul 20 ist für einen paraxialen Abbildungsmaßstab beta_pK' mit dem Betrag von 0,5 bis 1 verwendbar, indem die Hochleistungs-Single-cell LED 12 und der Flüssiglichtleiter 30 mit seinem Eintrittsfenster 31 in der jeweils entsprechenden Tiefenposition eingestellt werden. Es wird unter Berücksichtigung des paraxialen Abbildungsmaßstabes beta_pK' und der Abbildungsleistung des optischen Kopplungsmoduls 20 als LED 12 hier die Hochleistungs-Single-cell LED der Firma Hedler aus der Dauerlichtquelle HEDLER Profilux LED650 mit einem Durchmesser von 18,5mm eingesetzt. Der Fluid-Lichtleiter 30 der Firma Lumatec aus der 380-Serie weist hier einen Durchmesser von 8mm und eine Länge von 2m auf. Die Ausleuchtung des Eintrittsfensters 31 des Flüssiglichtleiters 30 bis zum Akzeptanzwinkel von 72° Vollwinkel und darüber hinaus ist durch das optische Kopplungsmodul 20 sicher gegeben. Der Abstand a* zwischen der Hochleistungs-Single-cell LED 12 und dem Eintrittsfenster 31 des Flüssiglichtleiters 30 beträgt hier 117mm. Für die Komponenten mit den oben bereits genannten Durchmessern und Abständen ist die Qualität der Abbildung dieses optisches Kopplungsmoduls 20 für die Lichteinkopplung aus einer LED in einen Fluid-Lichtleiter voll ausreichend.

Insbesondere im mittleren Bereich des oben genannten Abbildungsmaßstabes wird eine für Beleuchtungszwecke sehr gute Abbildungsleistung erreicht.

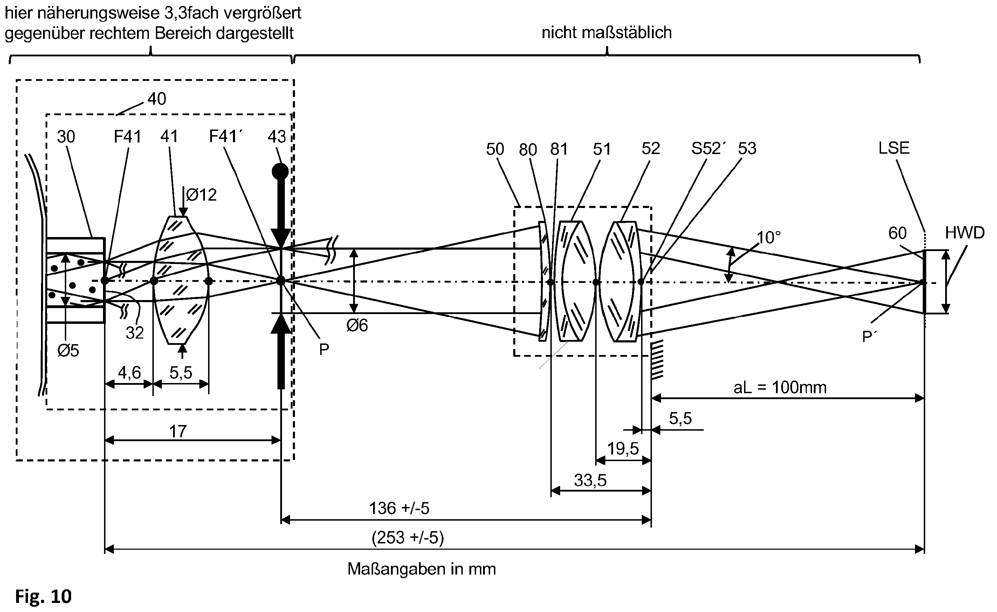

In der Figur 10 ist das Optikschema mit dem 380-Fluid-Lichtleiter 30 der Firma Lumatec dargestellt, welcher hier als ein Fluid-Lichtleiter mit 5mm optischem Durchmesser gezeichnet ist. Das am Austrittsfenster 32 des Fluid-Lichtleiters 30 austretende Licht trifft auf die hochaperturige, asymmetrische Sammellinse 41. Diese hochaperturige, asymmetrische Sammellinse 41 ist auf einer Linsenseite asphärisch ausgebildet und weist eine Brennweite von f41'= 7,5mm und einen Durchmesser von 12mm auf und deren stärker gekrümmte, asphärische Fläche ist der Irisblende 43 zugekehrt. Diese Sammellinse 41 wird von der Firma Edmund Optics unter der Artikelnummer 35-039 vertrieben. Die Irisblende 43 ist hier in Figur 10 auf einen Durchmesser von 6mm eingestellt. Dabei steht der Fluid-Lichtleiter 30 in der vorderen Brennebene mit dem Brennpunkt F41 der hochaperturigen, asymmetrischen Sammellinse 41. Dies ergibt wegen der sehr gleichmäßigen Lichtabstrahlung des Fluid-Lichtleiters 30 im Winkelbereich auch eine sehr homogene Lichtverteilung in der hinteren Brennebene mit dem Brennpunkt F41'. Die Irisblende 43 stellt hier das scharf abzubildende Objekt dar, welches durch die dünne Zusatzlinse 80 sowie auch durch das erste 51 und das zweite 52 lichtsammelnde, gekittete, achromatische Linsendublett, die baugleich sind, abgebildet wird. Die dünne Zusatzlinse 80 ist hier als ein sammelndes Brillenglas in Meniskusform mit einer Brechkraft von + 1,5 Dioptrien ausgebildet und dient der Erhöhung der Brechkraft bei der Abbildung und dem Erreichen eines freien Arbeitsabstandes aL von 100mm. Das Brillenglas ist aus dem duroplastischen Kunststoff Polyallyldiglycolcarbonat (CR-39) für Brillengläser gefertigt, der eine Abbe-Zahl von 58 und somit eine vergleichsweise geringe Dispersion aufweist, um chromatische Aberrationen bei der Abbildung der Irisblende 43 kleinzuhalten. Der Durchmesser des sammelnden Brillenglases beträgt 40mm. Die lichtsammelnden, gekitteten, achromatischen Linsendubletts 51 und 52 weisen die Brennweiten f51'gleich f52' gleich 120mm und ebenfalls einen Durchmesser von jeweils 40mm auf. Dabei sind die Linsenbäuche der beiden lichtsammelnden, gekitteten, achromatischen Linsendubletts 51 und 52 einander zugekehrt. Diese lichtsammelnden, gekitteten, achromatischen Linsendubletts 51 und 52 werden von der Firma Qioptic mit der Artikelnummer G322388000 vertrieben. Durch die Abbildung der ausgeleuchteten Irisblende 43 entsteht das homogene Lichtfeld 60. Dieses Lichtfeld 60 mit dem zugehörigen abbildenden Strahlengang ist hier der Anschaulichkeit wegen in der Höhe deutlich zu groß dargestellt. Der Lichtpunkt P liegt in der Ebene der Irisblende 43 und fällt mit dem hinteren Brennpunkt F42' der hochaperturigen optischen Linse 42 zusammen. Der Bildpunkt P' im Lichtfeld 60 ist zum Lichtpunkt P durch Abbildung mittels der dünnen Zusatzlinse 80 und den beiden lichtsammelnden, gekitteten, achromatischen Linsendubletts 51 und 52 optisch konjugiert. Der Wechsel des Maßstabs in der Darstellung mit der Vergrößerung desselben etwa um den Faktor 3,3 auf der linken Seite der Figur 10 ist hier sinnvoll, weil sonst hier auf der linken Seite die Details nicht gut darstellbar sind. In der Anordnung nach Figur 10 beträgt der freie Abstand aL = 100mm. Zumindest näherungsweise ergibt sich dann bei dieser Anordnung nach Figur 10 mit den angegebenen Maßen und Komponenten der Betrag des Abbildungsmaßstabes beta' zu eins. Die volle Ausleuchtung der Irisblende 43 ist hierbei bis zu einem Durchmesser von näherungsweise 8 mm gut gegeben.

In einem fünften Ausführungsbeispiel ohne Figur wird in einer Anordnung nach Figur 10 ein Fluid-Lichtleiter 30 mit 8mm Durchmesser eingesetzt. Wird dieser mit einer hochaperturigen, asymmetrischen Sammellinse 41 mit einem Durchmesser von 20mm und einer Brennweite von 11mm betrieben, ist die volle Ausleuchtung der Irisblende 43 hierbei bis zu einem Durchmesser von näherungsweise 12 mm gegeben. Hierzu kann die asphärische Kondensorlinse 35-052 der Firma Edmund Optics eingesetzt werden.

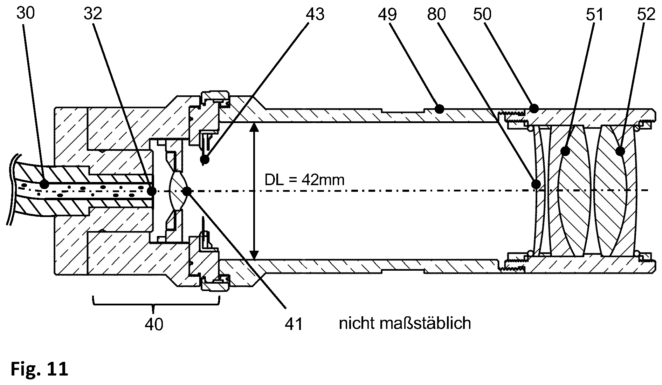

Die Figur 11 stellt die Konstruktionsansicht mit dem Fluid-Lichtleiters 30 und seinem Austrittsfenster 32 sowie dem Blendentubus 40, einem Zwischentubus 49 und der Abbildungsstufe 50 dar. Im Blendentubus sind die hochaperturige, asymmetrische Sammellinse 41 und die Irisblende 43 angeordnet. In der Abbildungsstufe 50 befinden sich die dünne Zusatzlinse 80 in Meniskenform mit einer positiven Brechkraft von 1,5 Dioptrien aus dem duroplastischen Werkstoff CR39 sowie die beiden baugleichen, lichtsammelnden, gekitteten, achromatischen Linsendubletts 51 und 52 mit der Brennweite von 120mm und dem Durchmesser von 40mm von der Firma Qioptic mit der Artikelnummer G322388000. Wesentlich für die Vermeidung von einem oder gar mehreren sehr unerwünschten Lichthöfen in der Umgebung des Lichtfeldes 60 ist, dass der freie Innendurchmesser DL des Zwischentubus 49 sowohl größer als der Durchmesser der dünnen Zusatzlinse 80 als auch der lichtsammelnden, gekitteten, achromatischen Linsendubletts 51 und 52 ausgebildet ist. Somit besteht hier ein Innendurchmesser des Zwischentubus 49 von 42mm.

### Bezugszeichenliste

- 10: Dauerlichtquelle mit einer Hochleistungs-Single-cell LED 12
- 11: Stromversorgung der Hochleistungs-Single-cell LED 12
- 12: Hochleistungs-Single-cell LED mit einer elektrischen Leistungsaufnahme größer/gleich 20W und einem Farbwiedergabeindex (CRI) größer/gleich 95
- 20: optisches Kopplungsmodul
- 21: asphärische Linse im optischen Kopplungsmodul 20. Das ist die erste asphärische Linse im optischen Kopplungsmodul 20.
- 22: asphärische Linse im optischen Kopplungsmodul 20 Das ist die zweite asphärische Linse im optischen Kopplungsmodul 20.
- 30: Fluid-Lichtleiter. Ein Fluid-Lichtleiter wird auch als Flüssiglichtleiter bezeichnet.
- 31: Eintrittsfenster des Fluid-Lichtleiters 30
- 32: Austrittsfenster des Fluid-Lichtleiters 30
- 40: Blendentubus
- 41: hochaperturige, asymmetrische Sammellinse
- 42: Abschattblende
- 43: Irisblende
- 49: Zwischentubus
- 50: Abbildungsstufe
- 51: erstes lichtsammelndes, gekittetes, achromatisches Linsendublett
- 52: zweites lichtsammelndes, gekittetes, achromatisches Linsendublett
- 53: vorderer mechanischer Anschlag der Fassung der Abbildungsstufe 50
- 60: kreisförmiges Lichtfeld. Der Durchmesser des Lichtfeldes ergibt sich mit dem auf die maximale Beleuchtungsstärke Emax bezogenen Halbwert-Durchmesser HWD.
- 70: Fotoobjektiv mit der Schärfeebene SE zur Makro-Aufnahme eines Objekts oder eines Objektdetails
- 71: Frontlinse des Fotoobjektivs 70
- 80: dünne Zusatzlinse in der Abbildungsstufe 50
- 81: Linsenbauch der dünnen Zusatzlinse (80) in Meniskenform
- 91: einzeln in der Abbildungsstufe 50 angeordnetes lichtsammelndes, gekittetes, achromatisches Linsendublett
- 92: Steinheil-Triplett-Achromat
- 93: zweiter Steinheil-Triplett-Achromat
- 94: erster Hastings-Triplett-Achromat
- 95: zweiter Hastings-Triplett-Achromat
- A: Bereich mit möglichen Platzproblemen
- a: freier Arbeitsabstand zwischen dem vorderen Anschlag der Fassung der Abbildungsstufe 50, welche keine Sammellinse enthält, und dem Lichtfeld 60
- aL: freier Arbeitsabstand dem vorderen Anschlag der Fassung der Abbildungsstufe 50, welche die Sammellinse 80 enthält, und dem Lichtfeld 60
- a*: Abstand zwischen der Hochleistungs-Single-cell LED 12 und dem Eintrittsfenster 31 des Flüssiglichtleiters 30
- af: außerfokale Ablage beim ersten lichtsammelnden, gekitteten, achromatischen Linsendublett
- 51: -
- BE: Blendenebene
- beta': Abbildungsmaßstab einer Abbildungsstufe
- beta_pK': paraxialer Abbildungsmaßstab des optischen Kopplungsmoduls 20
- BFL: Back focal length. Diese wird auch als hintere Brennweite bezeichnet und wird ab dem Linsenscheitel zum Brennpunkt gerechnet.
- CRI: Color Rendering Index Es wird dafür auch der Begriff Farbwiedergabeindex verwendet.
- DL: lichter Durchmesser des Tubus der Abbildungsstufe 50
- E: Beleuchtungsstärke
- Emax: maximale Beleuchtungsstärke im Zentrum eines kreisförmigen Lichtfeldes 60
- F21: paraxialer vorderer Brennpunkt der asphärischen Linse 21
- F22': paraxialer hinterer Brennpunkt der asphärischen Linse 22
- F41: paraxialer vorderer Brennpunkt der hochaperturigen, asymmetrischen Sammellinse 41
- F41': paraxialer hinterer Brennpunkt der hochaperturigen, asymmetrischen Sammellinse 41
- f41': paraxiale Brennweite der hochaperturigen, asymmetrischen Sammellinse 41
- F51: vorderer Brennpunkt des ersten lichtsammelnden, gekitteten, achromatischen Linsendubletts
- 51: -
- f51': Brennweite des ersten lichtsammelnden, gekitteten, achromatischen Linsendubletts 51
- F52': hinterer Brennpunkt des zweiten lichtsammelnden, gekitteten, achromatischen Linsendubletts 52
- f52': Brennweite des zweiten lichtsammelnden, gekitteten, achromatischen Linsendubletts 52
- F91: vorderer Brennpunkt eines einzelnen lichtsammelnden, gekitteten, achromatischen Linsendubletts 91
- F91': hinterer Brennpunkt eines einzelnen lichtsammelnden, gekitteten, achromatischen Linsendubletts 91
- f91': Brennweite eines einzelnen lichtsammelnden, gekitteten, achromatischen Linsendubletts 91
- F92: vorderer Brennpunkt des Steinheil-Triplett-Achromaten 92
- F92': hinterer Brennpunkt des Steinheil-Triplett-Achromaten 92
- f92': Brennweite des Steinheil-Triplett-Achromaten 92
- F93: vorderer Brennpunkt des Steinheil-Triplett-Achromaten 93
- F93': hinterer Brennpunkt des Steinheil-Triplett-Achromaten 93
- f93': Brennweite des Steinheil-Triplett-Achromaten 93
- F94: vorderer Brennpunkt des Hastings-Triplett-Achromaten 94
- F94': hinterer Brennpunkt des Hastings-Triplett-Achromaten 94
- f94': Brennweite des Hastings-Triplett-Achromaten 94
- F95: vorderer Brennpunkt des Hastings-Triplett-Achromaten 95
- F95': hinterer Brennpunkt des Hastings-Triplett-Achromaten 95
- f95': Brennweite des Hastings-Triplett-Achromaten 95
- HWD: Halbwert-Durchmesser des Lichtfeldes 60 in der Ebene der besten Randschärfe, bezogen auf die maximale Beleuchtungsstärke Emax im Zentrum des Lichtfeldes Es ist HWD=D(0,5Emax).
- K: Linienkontrast von Linienpaaren am Rand des Lichtfeldes 60
- LSE: Ebene mit bester Randschärfe des Lichtfeldes
- P: Lichtpunkt
- P': Bildpunkt, optische Konjugation des Lichtpunktes P
- r: Radius des Lichtfeldes 60
- SE: Schärfeebene des Fotoobjektivs 70
- s1: objektseitige Schnittweite der ersten asphärischen Linse 21
- s2': bildseitige Schnittweite der zweiten asphärischen Linse 22
- S52': bildseitiger Scheitelpunkt des lichtsammelnden, gekitteten, achromatischen Linsendubletts 52

## Patentansprüche

1. Anordnung zur Erzeugung eines beabstandeten, einstellbaren Lichtfeldes für die Makrofotografie, insbesondere auch zur objektangepassten Beleuchtung mit scharfem Lichtfeldrand und dabei mit einem Lichtfeld mit mindestens einer lateralen Ausdehnung von größer/gleich 0,9mm und einer maximalen lateralen Ausdehnung kleiner/gleich 12mm zur Beleuchtung kleinteiliger Objekte und kleiner Objektdetails
mit einer LED,
mit einem Lichtleiter,
mit einer Abschattblende und
mit einer Abbildungsstufe,
wobei in der Anordnung zur Erzeugung eines beabstandeten, einstellbaren Lichtfeldes für die Makrofotografie folgende Komponenten angeordnet sind:
- eine LED, welche als eine Dauerlicht-LED (12) mit mindestens 20W elektrischer Leistungsaufnahme und einem Color Rendering Index (CRI) größer/gleich 90 ausgebildet ist,
- ein optisches Kopplungsmodul (20),
- ein Lichtleiter, der als Fluid-Lichtleiter (30) mit einem Durchmesser des optisch nutzbaren Bereiches zwischen 2,5mm und 10mm und ausgebildet ist und der dem optischen Kopplungsmodul (20) nachgeordnet ist,
- ein Blendentubus (40), der mit einer hochaperturigen, asymmetrischen Sammellinse (41) und mit mindestens einer der hochaperturigen, asymmetrischen Sammellinse (41) nachgeordneten Abschattblende (42) ausgebildet ist, deren Bild das Lichtfeld (60) ist,
- eine dem Blendentubus (40) nachgeordnete Abbildungsstufe (50) für einen Betrag des Abbildungsmaßstabes beta' bei der Abbildung der Abschattblende zwischen 0,7 und 2
- und das optische Kopplungsmodul (20) mit zwei positiven und dabei asymmetrisch gestalteten asphärischen Linsen (21, 22) mit einer numerischen Apertur größer/gleich 0,4 ausgebildet ist
- und der Betrag des paraxialen Abbildungsmaßstabes des optischen Kopplungsmoduls (20) beta_pK' zwischen 0,5 und 1,2 liegt
- und der Fluid-Lichtleiter (30) von mindestens 0,8m Länge zwischen dem optischen Kopplungsmodul (20) und dem Blendentubus (40) angeordnet ist
- und das Austrittsfenster (32) des Fluid-Lichtleiters (30) zumindest näherungsweise in der vorderen Brennebene (F41) der asymmetrischen Sammellinse (41) angeordnet ist
- und die hochaperturige, asymmetrische Sammellinse (41) im Blendentubus (40) eine Brennweite größer/gleich 4mm und kleiner/gleich 24mm aufweist und die numerische Apertur derselben stets größer/gleich 0,4 und die stärker gekrümmte Linsenfläche der hochaperturigen, asymmetrischen Sammellinse (41) dabei der Abschattblende (42, 43) zugekehrt ist
- und die Abbildungsstufe (50) mit mindestens einer lichtsammelnden, achromatischen Linsengruppe (51, 52, 90, 91, 93, 94), deren Linsendurchmesser größer/gleich 38mm ist, zur Erzeugung eines scharf berandeten Lichtfeldes (60) ausgebildet ist, welches im Ergebnis der Abbildung der Abschattblende (42) entsteht
- und der freie Arbeitsabstand (a, aL) zum Lichtfeld (60) vom vorderen mechanischen Anschlag (53) der Fassung der Abbildungsstufe (50) größer/gleich 80mm ist.

2. Anordnung zur Erzeugung eines beabstandeten, einstellbaren Lichtfeldes für die Makrofotografie nach Anspruch 1, **dadurch gekennzeichnet, dass** in der Abbildungsstufe (50) anstelle nur einer lichtsammelnden, achromatischen, lichtsammelnden, Linsengruppe zwei lichtsammelnde, gekittete achromatische Linsen-Dubletts (51, 52) mit dem Optikdesign jeweils einseitig für einen Strahlengang nach Unendlich mit einer Brennweite (f51', f52') größer/gleich 80mm und kleiner/gleich 200mm ausgebildet sind.

3. Anordnung zur Erzeugung eines beabstandeten, einstellbaren Lichtfeldes für die Makrofotografie nach Anspruch 2, **dadurch gekennzeichnet, dass** die beiden lichtsammelnden, gekitteten, achromatischen Linsen-Dubletts (51, 52) in der Abbildungsstufe (50) eine unterschiedliche Brennweite (f51', f52') aufweisen, die jeweils größer/gleich 80mm ist und das Verhältnis von deren Brennweiten (f51', f52') zwischen 0,7 und 2 liegt.

4. Anordnung zur Erzeugung eines beabstandeten, einstellbaren Lichtfeldes (60) für die Makrofotografie nach Anspruch 2, **dadurch gekennzeichnet, dass** die beiden lichtsammelnden, gekitteten, achromatischen Linsen-Dubletts (51, 52) in der Abbildungsstufe (50) jeweils eine Brennweite von (f51', f52') von 120mm aufweisen.

5. Anordnung zur Erzeugung eines beabstandeten, einstellbaren Lichtfeldes (60) für die Makrofotografie nach Anspruch 3, **dadurch gekennzeichnet, dass** eines der beiden lichtsammelnden, gekitteten, achromatischen Linsen-Dubletts (51, 52) in der Abbildungsstufe (50) eine Brennweite von 100mm und das andere eine Brennweite von 120mm aufweist.

6. Anordnung zur Erzeugung eines beabstandeten, einstellbaren Lichtfeldes (60) für die Makrofotografie nach Anspruch 5, **dadurch gekennzeichnet, dass** das erste der beiden lichtsammelnden, gekitteten, achromatischen Linsen-Dubletts (51) in der Abbildungsstufe (50) eine Brennweite von f51'=100mm und das zweite Linsen-Dubletts (52) in der Abbildungsstufe (50) eine Brennweite von f52'=120mm aufweist.

7. Anordnung zur Erzeugung eines beabstandeten, einstellbaren Lichtfeldes (60) für die Makrofotografie nach Anspruch 6, **dadurch gekennzeichnet, dass** die Abschattblende (42, 43) mit einer extrafokalen Ablage af zum Brennpunkt (F51) des ersten lichtsammelnden, gekitteten, achromatischen Linsen-Dubletts (51) in der Abbildungsstufe (50) mit einem Betrag af von bis zu 15mm angeordnet ist.

8. Anordnung zur Erzeugung eines beabstandeten, einstellbaren Lichtfeldes für die Makrofotografie nach einem der Ansprüche 3 bis 6, **dadurch gekennzeichnet, dass** den beiden lichtsammelnden, gekitteten, achromatischen Linsen-Dubletts (51, 52) in der Abbildungsstufe (50) eine dünne Zusatzlinse (80) beigeordnet ist, deren Betrag der Brechkraft zwischen 0,5 Dioptrien und 2,0 Dioptrien liegt.

9. Anordnung zur Erzeugung eines beabstandeten, einstellbaren Lichtfeldes für die Makrofotografie nach Anspruch 8, **dadurch gekennzeichnet, dass** der Werkstoff der dünnen Zusatzlinse (80) mit einer Abbe-Zahl größer/gleich 56 hergestellt ist.

10. Anordnung zur Erzeugung eines beabstandeten, einstellbaren Lichtfeldes für die Makrofotografie nach Anspruch 9, **dadurch gekennzeichnet, dass** die dünne Zusatzlinse (80) als Sammellinse ausgebildet ist.

11. Anordnung zur Erzeugung eines beabstandeten, einstellbaren Lichtfeldes für die Makrofotografie nach Anspruch 9, **dadurch gekennzeichnet, dass** die dünne Zusatzlinse (80) als Zerstreuungslinse ausgebildet ist.

12. Anordnung zur Erzeugung eines beabstandeten, einstellbaren Lichtfeldes für die Makrofotografie nach einem der Ansprüche 10 oder 11, **dadurch gekennzeichnet, dass** die dünne Zusatzlinse (80) in Meniskenform ausgebildet ist, deren Linsenbauch jeweils einem lichtsammelnden, gekitteten, achromatischen Linsen-Dublett (51, 52) in der Abbildungsstufe (50) zugewandt ist.

13. Anordnung zur Erzeugung eines beabstandeten, einstellbaren Lichtfeldes für die Makrofotografie nach mindestens einem der Ansprüche 8 bis 12, **dadurch gekennzeichnet, dass** die dünne Zusatzlinse (80) aus dem duroplastischen Kunststoff Polyallyldiglycolcarbonat ür Brillengläser gefertigt ist.

14. Anordnung zur Erzeugung eines beabstandeten, einstellbaren Lichtfeldes für die Makrofotografie nach mindestens einem der Ansprüche 8 bis 12, **dadurch gekennzeichnet, dass** die dünne Zusatzlinse (80) aus Mineralglas ausgebildet ist, deren Abbe-Zahl größer/gleich 56 beträgt.

15. Anordnung zur Erzeugung eines beabstandeten, einstellbaren Lichtfeldes für die Makrofotografie nach mindestens einem der Ansprüche 12 bis 14, **dadurch gekennzeichnet, dass**, die dünne Zusatzlinse (80) in Meniskenform in der Abbildungsstufe (50) in Strahlrichtung vor dem ersten lichtsammelnden, gekitteten, achromatischen Linsen-Dublett (51) und mit ihrem Linsenbauch (81) zum in Strahlrichtung lichtsammelnden, gekitteten, achromatischen Linsen-Dublett (51) angeordnet ist.

## Claims

1. An arrangement for generating a spaced, adjustable light field for macro photography, in particular also for object-adapted illumination with a sharp light field edge and, in doing so, with a light field having at least one lateral extent greater than or equal to 0.9 mm and a maximum lateral extent less than or equal to 12 mm for illuminating small objects and small object details
with an LED,
with a light guide,
with a shadowing aperture, and
with an imaging stage,
wherein, in the arrangement for generating a spaced, adjustable light field for macro photography, the following components are arranged:
- an LED, which is configured as a continuous-light LED (12) with at least 20 W electrical power consumption and a Color Rendering Index (CRI) greater than or equal to 90,
- an optical coupling module (20),
- a light guide, which is configured as a fluid light guide (30) with a diameter of the optically usable region between 2.5 mm and 10 mm and which is arranged downstream of the optical coupling module (20),
- an aperture tube (40), which is configured with a high-aperture, asymmetric converging lens (41) and with at least one shadowing aperture (42) arranged downstream of the high-aperture, asymmetric converging lens (41), the image of which is the light field (60),
- an imaging stage (50) arranged downstream of the aperture tube (40) for an absolute value of the imaging scale beta' when imaging the shadowing aperture between 0.7 and 2
- and the optical coupling module (20) is configured with two positive and asymmetrically designed aspheric lenses (21, 22) having a numerical aperture greater than or equal to 0.4
- and the absolute value of the paraxial imaging scale of the optical coupling module (20) beta_pK' lies between 0.5 and 1.2
- and the fluid light guide (30) of at least 0.8 m length is arranged between the optical coupling module (20) and the aperture tube (40)
- and the exit window (32) of the fluid light guide (30) is arranged at least approximately in the front focal plane (F41) of the asymmetric converging lens (41)
- and the high-aperture, asymmetric converging lens (41) in the aperture tube (40) has a focal length greater than or equal to 4 mm and less than or equal to 24 mm and the numerical aperture thereof is always greater than or equal to 0.4 and the more strongly curved lens surface of the high-aperture, asymmetric converging lens (41) thereby faces the shadowing aperture (42, 43)
- and the imaging stage (50) is configured with at least one light-collecting, achromatic lens group (51, 52, 90, 91, 93, 94), whose lens diameter is greater than or equal to 38 mm, to generate a sharply bordered light field (60), which arises as a result of the imaging of the shadowing aperture (42)
- and the free working distance (a, aL) to the light field (60) from the front mechanical stop (53) of the mount of the imaging stage (50) is greater than or equal to 80 mm.

2. An arrangement for generating a spaced, adjustable light field for macro photography according to claim 1, **characterized in that**, in the imaging stage (50), instead of only one light-collecting, achromatic, light-collecting lens group, two light-collecting, cemented achromatic lens doublets (51, 52) with the optical design, each on one side for a beam path to infinity, with a focal length (f51', f52') greater than or equal to 80 mm and less than or equal to 200 mm, are configured.

3. An arrangement for generating a spaced, adjustable light field for macro photography according to claim 2, **characterized in that** the two light-collecting, cemented, achromatic lens doublets (51, 52) in the imaging stage (50) have different focal lengths (f51', f52'), each of which is greater than or equal to 80 mm, and the ratio of their focal lengths (f51', f52') lies between 0.7 and 2.

4. An arrangement for generating a spaced, adjustable light field (60) for macro photography according to claim 2, **characterized in that** the two light-collecting, cemented, achromatic lens doublets (51, 52) in the imaging stage (50) each have a focal length of (f51', f52') of 120 mm.

5. An arrangement for generating a spaced, adjustable light field (60) for macro photography according to claim 3, **characterized in that** one of the two light-collecting, cemented, achromatic lens doublets (51, 52) in the imaging stage (50) has a focal length of 100 mm and the other has a focal length of 120 mm.

6. An arrangement for generating a spaced, adjustable light field (60) for macro photography according to claim 5, **characterized in that** the first of the two light-collecting, cemented, achromatic lens doublets (51) in the imaging stage (50) has a focal length of f51'=100 mm and the second lens doublet (52) in the imaging stage (50) has a focal length of f52'=120 mm.

7. An arrangement for generating a spaced, adjustable light field (60) for macro photography according to claim 6, **characterized in that** the shadowing aperture (42, 43) is arranged with an extrafocal offset af relative to the focal point (F51) of the first light-collecting, cemented, achromatic lens doublet (51) in the imaging stage (50) with an absolute value af of up to 15 mm.

8. An arrangement for generating a spaced, adjustable light field for macro photography according to one of claims 3 to 6, **characterized in that** a thin additional lens (80) is assigned to the two light-collecting, cemented, achromatic lens doublets (51, 52) in the imaging stage (50), whose absolute value of the refractive power lies between 0.5 diopters and 2.0 diopters.

9. An arrangement for generating a spaced, adjustable light field for macro photography according to claim 8, **characterized in that** the material of the thin additional lens (80) is manufactured with an Abbe number greater than or equal to 56.

10. An arrangement for generating a spaced, adjustable light field for macro photography according to claim 9, **characterized in that** the thin additional lens (80) is configured as a converging lens.

11. An arrangement for generating a spaced, adjustable light field for macro photography according to claim 9, **characterized in that** the thin additional lens (80) is configured as a diverging lens.

12. An arrangement for generating a spaced, adjustable light field for macro photography according to one of claims 10 or 11, **characterized in that** the thin additional lens (80) is configured in meniscus form, whose lens bulge respectively faces a light-collecting, cemented, achromatic lens doublet (51, 52) in the imaging stage (50).

13. An arrangement for generating a spaced, adjustable light field for macro photography according to at least one of claims 8 to 12, **characterized in that** the thin additional lens (80) is made of the thermosetting plastic polyallyldiglycolcarbonate for eyeglass lenses.

14. An arrangement for generating a spaced, adjustable light field for macro photography according to at least one of claims 8 to 12, **characterized in that** the thin additional lens (80) is configured from mineral glass, whose Abbe number is greater than or equal to 56.

15. An arrangement for generating a spaced, adjustable light field for macro photography according to at least one of claims 12 to 14, **characterized in that** the thin additional lens (80) in meniscus form is arranged in the imaging stage (50) in the beam direction in front of the first light-collecting, cemented, achromatic lens doublet (51) and with its lens bulge (81) toward the light-collecting, cemented, achromatic lens doublet (51) in the beam direction.

## Revendications

1. Agencement pour générer un champ lumineux réglable espacé pour la macro-photographie, et plus particulièrement pour un éclairage adapté à un objet avec un bord de champ lumineux net et ainsi avec un champ lumineux présentant au moins une dilatation latérale supérieure ou égale à 0,9 mm et une dilatation latérale maximale inférieure ou égale à 12 mm pour l'éclairage de petits objets et de petits détails d'objets
avec une diode électroluminescente (DEL) ;
avec un guide optique ;
avec un diaphragme obscurcissant, et
avec une optique de reproduction
dans lequel pour l'agencement pour générer un champ lumineux réglable espacé pour la macro-photographie, les composants suivants sont agencés :
- une DEL, laquelle se présente comme une DEL à lumière fixe (12) avec au minimum une puissance absorbée électrique de 20 W et un indice de rendu des couleurs (Color Rendering Index, CRI) supérieur ou égal à 90 ;
- un module de couplage optique (20) ;
- un guide optique, lequel se présente comme un guide optique à fluide (30) avec un diamètre de plage optique utile comprise entre 2,5 mm et 10 mm, et est agencé après le module de couplage optique (20) ;
- un tube de diaphragme (40), lequel est formé avec une lentille convergente asymétrique à ouverture élevée (41) et avec au moins un diaphragme obscurcissant (42) agencé après la lentille convergente asymétrique à ouverture élevée (41), dont l'image est le champ lumineux (60) ;
- une optique de reproduction (50) agencée après le tube de diaphragme (40) pour une valeur d'échelle de reproduction bêta' lors de la reproduction du diaphragme obscurcissant comprise entre 0,7 et 2 ;
- le module de couplage optique (20) étant formé avec deux lentilles positives et asphériques conçues ainsi de manière asymétriques (21,22) avec une ouverture numérique supérieure ou égale à 0,4 ;
- la valeur de l'échelle de reproduction paraxiale du module de couplage optique (20) bêta_pK' se situant entre 0,5 et 1,2 ;
- le guide optique à fluide (30) d'une longueur d'au moins 0,8 m étant agencé entre le module de couplage optique (20) et le tube de diaphragme (40) ;
- la fenêtre de sortie (32) du guide optique à fluide (30) étant agencée au moins approximativement dans le plan focal avant (F41) de la lentille convergente asymétrique (41) ;
- la lentille convergente asymétrique à ouverture élevée (41) dans le tube de diaphragme (40) présentant une distance focale supérieure ou égale à 4 mm et inférieure ou égale à 24 mm ; l'ouverture numérique de celle-ci étant systématiquement supérieure ou égale à 0,4, et la surface de lentille incurvée plus forte étant tournée vers la lentille convergente asymétrique à ouverture élevée (41), et ainsi vers le diaphragme obscurcissant (42, 43) ;
- l'optique de reproduction (50) étant dotée d'au moins un groupe de lentilles achromatiques collectant la lumière (51, 52, 90, 91, 93, 94), dont le diamètre de lentille est supérieur ou égal à 38 mm, pour générer un champ lumineux de bord net (60), lequel est le résultat de la reproduction du diaphragme obscurcissant (42), et
- la distance de travail libre (a, aL) jusqu'au champ lumineux (60) à partir de la butée mécanique avant (53) de la monture de l'optique de reproduction (50) étant supérieure ou égale à 80 mm.

2. Agencement pour générer un champ lumineux réglable espacé pour la macro-photographie selon la revendication 1, **caractérisé en ce que** dans l'optique de reproduction (50), au lieu d'un seul groupe de lentilles collectant la lumière achromatique, deux doublets de lentilles achromatiques collectant la lumière collés (51, 52) sont formés avec une conception optique à chaque fois unilatérale pour un trajet optique jusqu'à l'infini avec une distance focale (f51', f52') supérieure ou égale à 80 mm et inférieure ou égale à 200 mm.

3. Agencement pour générer un champ lumineux réglable espacé pour la macro-photographie selon 1a revendication 2, **caractérisé en ce que** les deux doublets de lentilles achromatiques collectant la lumière collés (51, 52) dans l'optique de reproduction (50) présentent une distance focale différente (f51', f52'), laquelle est supérieure ou égale à 80 mm, et le rapport entre leurs distances focales (f51', f52') se situe entre 0,7 et 2.

4. Agencement pour générer un champ lumineux réglable espacé (60) pour la macro-photographie selon la revendication 2, **caractérisé en ce que** les deux doublets de lentilles achromatiques collectant la lumière collés (51, 52) dans l'optique de reproduction (50) présentent chacun une distance focale (f51', f52') de 120 mm.

5. Agencement pour générer un champ lumineux réglable espacé (60) pour la macro-photographie selon la revendication 3, **caractérisé en ce qu'**un des deux doublets de lentilles achromatiques collectant la lumière collés (51, 52) dans l'optique de reproduction (50) présentent une distance focale de 100 mm, et l'autre une distance focale de 120 mm.

6. Agencement pour générer un champ lumineux réglable espacé (60) pour la macro-photographie selon la revendication 5, **caractérisé en ce que** le premier des deux doublets de lentilles achromatiques collectant la lumière collés (51) dans l'optique de reproduction (50) présente une distance focale de f51' = 100 mm, et le deuxième doublet de lentilles (52) dans l'optique de reproduction (50) présente une distance focale de f52' = 120 mm.

7. Agencement pour générer un champ lumineux réglable espacé (60) pour la macro-photographie selon la revendication 6, **caractérisé en ce que** le diaphragme obscurcissant (42, 43) est agencé avec une déviation extrafocale af jusqu'au foyer (F51) du premier doublet de lentilles achromatiques collectant la lumière collé (51) dans l'optique de reproduction (50) avec une valeur af allant jusqu'à 15 mm.

8. Agencement pour générer un champ lumineux réglable espacé pour la macro-photographie selon l'une quelconque des revendications 3 à 6, **caractérisé en ce qu'**une lentille supplémentaire mince (80) est associée aux deux doublets de lentilles achromatiques collectant la lumière collés (51, 52) dans l'optique de reproduction (50), celle-ci présentant une valeur de réfringence comprise entre 0,5 dioptrie et 2,0 dioptries.

9. Agencement pour générer un champ lumineux réglable espacé pour la macro-photographie selon la revendication 8, **caractérisé en ce que** le matériau de la lentille supplémentaire mince (80) est fabriqué avec un nombre d'Abbe supérieur ou égal à 56.

10. Agencement pour générer un champ lumineux réglable espacé pour la macro-photographie selon la revendication 9, **caractérisé en ce que** la lentille supplémentaire mince (80) se présente comme une lentille convergente.

11. Agencement pour générer un champ lumineux réglable espacé pour la macro-photographie selon 1a revendication 9, **caractérisé en ce que** la lentille supplémentaire mince (80) se présente comme une lentille divergente.

12. Agencement pour générer un champ lumineux réglable espacé pour la macro-photographie selon la revendication 10 ou 11, **caractérisé en ce que** la lentille supplémentaire mince (80) se présente sous une forme de ménisque, dont la convexité de lentille est orientée à chaque fois vers un doublet de lentilles achromatiques collectant la lumière collé (51, 52) dans l'optique de reproduction (50).

13. Agencement pour générer un champ lumineux réglable espacé pour la macro-photographie selon l'une quelconque des revendications 8 à 12, **caractérisé en ce que** la lentille supplémentaire mince (80) est fabriquée dans du plastique thermodurcissable polydiéthylène glycol bisallylcarbonate pour verres de lunettes.

14. Agencement pour générer un champ lumineux réglable espacé pour la macro-photographie selon l'une quelconque des revendications 8 à 12, **caractérisé en ce que** la lentille supplémentaire mince (80) est formée à partir de verre minéral dont le nombre d'Abbe est supérieur ou égal à 56.

15. Agencement pour générer un champ lumineux réglable espacé pour la macro-photographie selon l'une quelconque des revendications 12 à 14, **caractérisé en ce que** la lentille supplémentaire mince (80) est agencée sous forme de ménisque dans l'optique de reproduction (50) dans la direction de faisceau avant le premier doublet de lentilles achromatiques collectant la lumière collé (51) et avec sa convexité de lentille (81) vers le doublet de lentilles achromatiques collectant la lumière collé (51) dans la direction de faisceau.
